# EUROPEAN PATENT APPLICATION

(11) **EP 4 375 969 A1**
(43) Date of publication of application: **29.05.2024**
(21) Application number: 22855445.7
(22) Date of filing: 09.08.2022
(51) Int. Cl.: G08G 1/0967

(54) **INTERACTION METHOD AND APPARATUS FOR TRAJECTORY INFORMATION**

(30) Priority: 12.08.2021 CN 202110926552
(71) Applicant: Huawei Technologies Co., Ltd., Shenzhen, Guangdong 518129 (CN)
(72) Inventor: HUA, Wenjian, Shenzhen, Guangdong 518129 (CN); WANG, Jun, Shenzhen, Guangdong 518129 (CN); WANG, Xiongjun, Shenzhen, Guangdong 518129 (CN)
(74) Representative: Thun, Clemens
(86) International application number: PCT/CN2022/111193
(87) International publication number: WO 2023/016464

(57) **Abstract**

This application provides a track information exchange method and apparatus. A first roadside device may receive, from another roadside device, track information outside a coverage area of the first roadside device. When the first roadside device successfully verifies a vehicle, the first roadside device may forward the track information to the vehicle. According to this application, in an intelligent transportation application scenario, track information of a traffic participant may be transferred to a vehicle through a forwarding operation of a roadside device, so that the vehicle has a beyond-line-of-sight sensing capability, and a basis is provided for the vehicle to make a more accurate or predictable traveling decision.

## Description

This application claims priority to Chinese Patent Application No. 202110926552.5, filed with the China National Intellectual Property Administration on August 12, 2021 and entitled "TRACK INFORMATION EXCHANGE METHOD AND APPARATUS", which is incorporated herein by reference in its entirety.

### TECHNICAL FIELD

This application relates to the field of intelligent transportation and intelligent vehicle technologies, and more specifically, to a track information exchange method and apparatus.

### BACKGROUND

A vehicle may obtain track information near the vehicle by using a roadside device (for example, a roadside edge computing (roadside edge computing, REC), a roadside unit (roadside unit, RSU), or a device that integrates an REC and an RSU). The track information may include, for example, a location of a traffic participant near the vehicle. A type of the traffic participant may include, for example, a motor vehicle, a non-motorized vehicle, a pedestrian, or a roadblock. To meet a traveling requirement of the vehicle, the vehicle needs to obtain track information at a farther location. In other words, the vehicle needs to obtain track information within a beyond-line-of-sight sensing range. The beyond-line-of-sight sensing range usually exceeds a coverage area of the roadside device.

### SUMMARY

This application provides a track information exchange method and apparatus, to enable a vehicle to obtain track information in a long distance. In some possible examples, a solution according to this application helps construct a better traveling planning solution. The solution according to this application may be applied to a large number of traffic scenarios, for example, an autonomous traveling scenario.

According to a first aspect, a track information exchange method is provided. The method is applied to a first roadside device, and includes: receiving a vehicle service request message from a vehicle, where the vehicle service request message includes verification information of the vehicle; determining, based on the verification information, that the vehicle succeeds in verification; receiving first track information of a first traffic participant from a second roadside device, where the first track information indicates a first track outside a coverage area of the first roadside device; and sending a track forwarding message to the vehicle, where the track forwarding message indicates the first track.

In embodiments of this application, track information of a traffic participant is transferred between a plurality of roadside devices, and one of the plurality of roadside devices forwards the track information from another device to a vehicle that succeeds in verification, so that the vehicle can obtain track information of a traffic participant in a long distance, and a basis is provided for the vehicle to make a more accurate or predictable traveling decision.

That the first roadside device receives the vehicle service request message from the vehicle may refer to that the first roadside device directly receives the vehicle service request message from the vehicle, or may refer to that the first roadside device receives the vehicle service request message from the vehicle through one or more relay devices. The vehicle service request message may be forwarded through the one or more relay devices.

That the first roadside device sends the track forwarding message to the vehicle may refer to that the first roadside device directly sends the track forwarding message to the vehicle, or may refer to that the first roadside device sends the track forwarding message to the vehicle through one or more relay devices. The track forwarding message may be forwarded through the one or more relay devices.

For example, the relay device may include one or more of the following content: a base station, an access network device, a data forwarding network element, and a user plane function network element.

For example, the first track information may include one or more of the following content: a traffic participant identifier, sensing time, a traffic participant type, a traffic participant appearance, a traffic participant model, a traffic participant license plate number, a location, a moving speed, and a moving direction.

The first track information may be, for example, a track within or outside a coverage area of the second roadside device.

For example, the track forwarding message may include one or more of the following content: first roadside device indication information, second roadside device indication information, and vehicle indication information. The first roadside device indication information indicates the first roadside device. The second roadside device indication information indicates the second roadside device. The vehicle indication information indicates the vehicle.

In a possible scenario, before sending the track forwarding message to the vehicle, the first roadside device may obtain a plurality of pieces of track information of a same traffic participant. The track forwarding message may carry only one piece of the plurality of pieces of track information. Specifically, before the sending a track forwarding message to the vehicle, the method further includes: obtaining third track information, where both the third track information and the first track information indicate a track of the first traffic participant, and the track forwarding message does not include the third track information. The third track information may be a track within the coverage area of the first roadside device, or a track within a coverage area of another roadside device (where the another roadside device is neither the first roadside device nor the second roadside device).

With reference to the first aspect, in some implementations of the first aspect, the determining, based on the verification information, that the vehicle succeeds in verification includes: sending a vehicle verification request message to a first server, where the vehicle verification request message includes the verification information; receiving a first verification notification message from the first server, where the first verification notification message indicates whether the vehicle succeeds in the verification; and determining, based on the first verification notification message indicating that the vehicle succeeds in the verification, that the vehicle succeeds in the verification.

A server may manage a vehicle within coverage areas of one or more roadside devices. A processing capability of the server is strong. Vehicle verification is performed by the server, to help reduce an information processing amount of a roadside device, and help the roadside device obtain and provide more track information for the vehicle.

In an example, after the receiving a first verification notification message from the first server, the method further includes: sending a vehicle service response message to the vehicle, where the vehicle service response message indicates that the vehicle succeeds in the verification.

With reference to the first aspect, in some implementations of the first aspect, the determining, based on the verification information, that the vehicle succeeds in verification includes: receiving service vehicle information from a first server, where the service vehicle information indicates a plurality of vehicles that have service receiving permission; determining, based on the verification information and the service vehicle information, whether the vehicle belongs to the plurality of vehicles that have the service receiving permission; and determining, based on a determining result that the vehicle belongs to the plurality of vehicles that have the service receiving permission, that the vehicle succeeds in the verification.

The server may send verification information of a plurality of vehicles to a roadside device in advance, so that the roadside device can have a vehicle verification function. Therefore, a quantity of signaling interaction times in a vehicle verification process can be reduced, and further, efficiency of vehicle verification can be improved.

In an example, after the determining that the vehicle succeeds in the verification, the method further includes: sending a vehicle service response message to the vehicle, where the vehicle service response message indicates that the vehicle succeeds in the verification.

With reference to the first aspect, in some implementations of the first aspect, the service vehicle information is index information of the plurality of vehicles that have the service receiving permission, and the track forwarding message is a periodic non-repetitive message; and the method further includes: receiving, from the first server, a verification failure message indicating that the vehicle fails in the verification; and stopping sending the track forwarding message to the vehicle based on the verification failure message.

The first roadside device may perform pre-verification, and temporarily provide a service for the vehicle when the pre-verification succeeds. An interaction delay between the first roadside device and the vehicle may be short, so that efficiency of providing a service by the first roadside device for the vehicle is improved, and a service waiting time of the vehicle is reduced. After the first roadside device obtains a final verification result of the vehicle from the server, if the final verification result is success, the first roadside device continues to provide a service for the vehicle; or if the final verification result is failure, the first roadside device stops providing a service for the vehicle.

The periodic non-repetitive message may refer to that a message type of the track forwarding message is a message sent periodically, and content of two track forwarding messages sent in two adjacent periods may be different. The first roadside device may periodically send the track forwarding message to the vehicle. When the first roadside device determines that the vehicle verification fails, the first roadside device may not send the track forwarding message in a current sending period or a next sending period. In other words, track forwarding messages of the current sending period or the next sending period may not be sent. Because the track forwarding message carries track information, and track information obtained by the roadside device each time is usually different, data content carried in track forwarding messages of different periods may be different. Optionally, a plurality of track forwarding messages sent in a plurality of periods may be non-repetitive.

In an example, after the receiving, from the first server, a verification failure message indicating that the vehicle fails in the verification, the method further includes: sending a vehicle service response message to the vehicle, where the vehicle service response message indicates that the vehicle fails in the verification.

With reference to the first aspect, in some implementations of the first aspect, the determining, based on the verification information, that the vehicle succeeds in verification includes: receiving a second verification notification message from a third roadside device, where the second verification notification message indicates that the vehicle succeeds in verification; and determining, based on the verification message and the second verification notification message, that the vehicle succeeds in the verification.

Based on a traveling route of the vehicle, the vehicle usually passes through coverage areas of a plurality of roadside devices. The verification result of the vehicle is transmitted through the roadside device, which helps reduce a time for vehicle verification, signaling interaction, and the like, and further helps improve signaling interaction efficiency.

In an example, after the receiving a second verification notification message from a third roadside device, the method further includes: sending a vehicle service response message to the vehicle in response to the vehicle service request message, where the vehicle service response message indicates that the vehicle succeeds in the verification.

With reference to the first aspect, in some implementations of the first aspect, before the sending a track forwarding message to the vehicle, the method further includes: receiving a first handover request message from a fourth roadside device, where the first handover request message is used to request to hand over a service device of the vehicle from the fourth roadside device to the first roadside device; and sending a first handover response message to the fourth roadside device in response to the first handover request message, where the first handover response message indicates that the first roadside device becomes the service device of the vehicle. The service device is a roadside device that provides an internet of vehicles service for the vehicle. When there are a plurality of roadside devices that simultaneously provide the internet of vehicles service for the vehicle, the service device is a roadside device that is in the plurality of roadside devices and that can schedule and manage the internet of vehicles service provided by the plurality of roadside devices for the vehicle.

When the vehicle moves to a handover area between the first roadside device and the fourth roadside device, both the first roadside device and the fourth roadside device can send track information to the vehicle, and this may cause unnecessary signaling overheads. Handover of the service device of the vehicle helps reduce signaling overheads. Roadside devices before and after the handover may exchange vehicle-related information, to help improve continuity of track information obtained by the vehicle.

When the roadside device determines that the vehicle succeeds in the verification or the service of the vehicle is handed over to the roadside device (which may alternatively mean that the roadside device completes registration of the vehicle, or may alternatively mean that the vehicle logs in to the roadside device), the roadside device can be the service device for the vehicle. For example, the service device of the vehicle may provide an internet of vehicles service for the served vehicle. The internet of vehicles service may be preset, or may be requested by the vehicle.

For example, the first handover request message may include one or more of the following: first roadside device indication information, fourth roadside device indication information, and vehicle indication information. The first roadside device indication information indicates the first roadside device. The fourth roadside device indication information indicates the fourth roadside device. The vehicle indication information indicates the vehicle.

For example, the first handover response message may include one or more of the following: first roadside device indication information, fourth roadside device indication information, and vehicle indication information.

In an example, a moment for sending the first handover response message may be a moment when the first roadside device obtains the track information of the vehicle within the coverage area of the first roadside device. Specifically, the first handover request message includes first feature information of the vehicle; and the method further includes: obtaining second feature information within the coverage area of the first roadside device; and the sending a first handover response message to the fourth roadside device includes: sending the first handover response message to the fourth roadside device based on a matching result of matching the second feature information with the first feature information.

In another example, a moment for sending the first handover response message may be a moment when the vehicle is located in an intersection area between the coverage area of the first roadside device and a coverage area of the fourth roadside device. Restricting service handover to the intersection area between coverage areas helps improve quality of signaling transmission and reception.

In a possible scenario, the first roadside device is located within a coverage area of the first server, and the fourth roadside device is located within a coverage area of a fourth server; and the method further includes: receiving an address and topology information of the fourth roadside device from the first server; and the sending a first handover response message to the fourth roadside device includes: sending the first handover response message to the fourth roadside device based on the address and the topology information of the fourth roadside device.

With reference to the first aspect, in some implementations of the first aspect, the method further includes: sending a first track request message to the second roadside device, where the first track request message is used to request track information obtained by the second roadside device; and the receiving first track information from a second roadside device includes: receiving a first track response message from the second roadside device in response to the first track request message, where the first track response message includes the first track information.

The second roadside device may send, at a request of the first roadside device, the track information obtained by the second roadside device to the first roadside device, so that the track information obtained by the first roadside device can better meet a requirement of the first roadside device, and quality and efficiency of signaling interaction can be improved.

In an example, the first roadside device is located within the coverage area of the first server, and the second roadside device is located within a coverage area of a second server; and the method further includes: receiving an address and topology information of the second roadside device from the first server; and the sending a first track request message to the second roadside device includes: sending the first track request message to the second roadside device based on the address and the topology information of the second roadside device.

For example, the first track request message may include one or more of the following: first roadside device indication information and second roadside device indication information. The first roadside device indication information indicates the first roadside device. The second roadside device indication information indicates the second roadside device.

For example, the first track response message may include one or more of the following: the first roadside device indication information and the second roadside device indication information.

With reference to the first aspect, in some implementations of the first aspect, before the sending a first track request message to the second roadside device, the method further includes: determining a beyond-line-of-sight sensing range; and determining the second roadside device based on the beyond-line-of-sight sensing range and a distance between a plurality of roadside devices, where the plurality of roadside devices include the first roadside device and the second roadside device, and the beyond-line-of-sight sensing range is greater than the coverage area of the first roadside device.

The first roadside device may flexibly adjust, based on the beyond-line-of-sight sensing range, a quantity of roadside devices that need to interact, so that the track information obtained by the first roadside device can better meet a requirement of the first roadside device, and quality and efficiency of signaling interaction can be improved.

For example, a sum of a distance between the second roadside device and the first roadside device and a sensing radius of the second roadside device is greater than a radius of the beyond-line-of-sight sensing range.

For another example, the distance between the second roadside device and the first roadside device is greater than a radius of the beyond-line-of-sight sensing range.

For another example, the second roadside device and the first roadside device are separated by at least N-1 roadside devices. N=floor(L/x), where L is a radius of the beyond-line-of-sight sensing range, x is an average distance between two adjacent roadside devices, and the function floor() is a round-down function.

For another example, there is a road intersection within the beyond-line-of-sight sensing range, the second roadside device and the first roadside device are respectively located on two sides of the road intersection, and a sum of a distance between the second roadside device and the road intersection, a distance between the road intersection and the first roadside device, and a sensing radius of the second roadside device is greater than a radius of the beyond-line-of-sight sensing range.

For another example, there is a road intersection within the beyond-line-of-sight sensing range, the second roadside device and the first roadside device are respectively located on two sides of the road intersection, and a sum of a distance between the second roadside device and the road intersection and a distance between the road intersection and the first roadside device is greater than a radius of the beyond-line-of-sight sensing range.

For another example, there is a road intersection within the beyond-line-of-sight sensing range, the second roadside device and the first roadside device are respectively located on two sides of the road intersection, and the second roadside device and the road intersection are separated by at least floor((L-d₁)/x) peripheral roadside devices, where L is a radius of the beyond-line-of-sight sensing range, d₁ is a distance between the first roadside device and the road intersection, x is an average distance between two adjacent roadside devices, and the function floor() is a round-down function.

In an example, the beyond-line-of-sight sensing range may be a preset beyond-line-of-sight sensing range, or a beyond-line-of-sight sensing range requested by the vehicle.

For example, the method further includes: receiving beyond-line-of-sight sensing range indication information from the vehicle, where the beyond-line-of-sight sensing range indication information indicates the beyond-line-of-sight sensing range requested by the vehicle.

For example, a specific range of the preset beyond-line-of-sight sensing range may be determined based on one or more of the following: a road type and a road congestion degree.

A center of the beyond-line-of-sight sensing range may correspond to a location of the first roadside device or a location of the vehicle. For example, the first roadside device may obtain the location of the vehicle in a sensing manner. Alternatively, the vehicle reports the location of the vehicle to the first roadside device, so that the first roadside device may obtain the location of the vehicle.

With reference to the first aspect, in some implementations of the first aspect, the method further includes: obtaining second track information of a second traffic participant, where the second track information indicates a second track; and sending the second track information to a fifth roadside device.

The first roadside device may send the track information obtained by the first roadside device to another roadside device, so that the another roadside device can obtain rich track information and send the rich track information to the vehicle.

The second track information may be sensed by the first roadside device, or sensed by a sensing device connected to the first roadside device and transmitted to the first roadside device. In other words, the second track information may be track information within or outside the coverage area of the first roadside device.

In a possible case, the second traffic participant and the first traffic participant may be a same traffic participant. In another possible case, the second traffic participant and the first traffic participant may be different traffic participants.

In a possible case, the second track information and the first track information may be same track information. In another possible case, the second track information and the first track information may be different track information.

For example, for a specific implementation of the second track information, refer to the foregoing first track information.

With reference to the first aspect, in some implementations of the first aspect, the method further includes: receiving a second track request message from the fifth roadside device, where the second track request message is used to request track information obtained by the first roadside device; and the sending the second track information to a fifth roadside device includes: sending a second track response message to the fifth roadside device in response to the second track request message, where the second track response message includes the second track information.

The first roadside device may send, at a request of the fifth roadside device, the track information obtained by the first roadside device to the fifth roadside device, so that the track information obtained by the fifth roadside device can better meet a requirement of the fifth roadside device, and quality and efficiency of signaling interaction can be improved.

For example, for specific implementations of the second track request message and the second track response message, refer to the first track request message and the first track response message.

With reference to the first aspect, in some implementations of the first aspect, the method further includes: sending a third verification notification message to a sixth roadside device, where the third verification notification message indicates that the vehicle succeeds in the verification.

Based on the traveling route of the vehicle, the vehicle usually passes through the coverage area of the first roadside device and a coverage area of the sixth roadside device. The first roadside device transmits the verification result of the vehicle to the sixth roadside device, which helps reduce a time for vehicle verification, signaling interaction, and the like, and further helps improve signaling interaction efficiency.

For example, for a specific implementation of the third verification notification message, refer to the second verification notification message.

With reference to the first aspect, in some implementations of the first aspect, the method further includes: sending a second handover request message to a seventh roadside device, where the second handover request message is used to request to hand over the service device of the vehicle from the first roadside device to the seventh roadside device; and receiving a second handover response message from the seventh roadside device, where the second handover response message indicates that the seventh roadside device becomes the service device of the vehicle.

When the vehicle moves to a handover area between the first roadside device and the seventh roadside device, both the first roadside device and the seventh roadside device can send track information to the vehicle, and this may cause unnecessary signaling overheads. Initiating handover of the service device of the vehicle by using the first roadside device helps reduce signaling overheads. The first roadside device and the seventh roadside device may exchange vehicle-related information, to help improve continuity of track information obtained by the vehicle.

For specific implementations of the second handover request message and the second handover response message, refer to the first handover request message and the first handover response message.

The method according to the first aspect or any one of the implementations of the first aspect is applied to the first roadside device. An execution body of the method includes but is not limited to the first roadside device, a component in the first roadside device, a chip in the first roadside device, or an application that may be installed and run on the first roadside device.

According to a second aspect, a track information exchange method is provided. The method is applied to a vehicle, and includes: sending a first vehicle service request message to a first roadside device, where the first vehicle service request message includes verification information of the vehicle; and receiving track information from the first roadside device, where the track information indicates a track outside a coverage area of the first roadside device.

The vehicle reports the verification information to the first roadside device, so that the first roadside device can verify the vehicle, send a message for a specific vehicle, and send rich track information to the vehicle. This helps enable the vehicle to obtain a good or suitable service for the vehicle from the first roadside device, to construct a good traveling scheme.

With reference to the second aspect, in some implementations of the second aspect, the track information indicates one or more of the following: a traffic participant identifier, sensing time, a traffic participant type, a traffic participant appearance, a traffic participant model, a traffic participant license plate number, a location, a moving speed, and a moving direction.

Various track information helps build a better traveling scheme for the vehicle.

With reference to the second aspect, in some implementations of the second aspect, the method further includes: sending beyond-line-of-sight sensing range indication information to the first roadside device, where the beyond-line-of-sight sensing range indication information indicates a beyond-line-of-sight sensing range requested by the vehicle.

The first roadside device may provide track information at a request of the vehicle, to flexibly adjust an amount of track information delivered by the first roadside device, and adapt an amount of information sent by the first roadside device to a processing capability of the vehicle.

With reference to the second aspect, in some implementations of the second aspect, the method further includes: when a service device of the vehicle is the first roadside device and after the vehicle enters a coverage area of a second roadside device, sending a second vehicle service request message to the second roadside device, where the second vehicle service request message includes the verification information of the vehicle.

The vehicle may trigger a next round of verification procedure based on a current location, so that vehicle verification efficiency is improved and unnecessary information overheads are reduced.

The method according to the second aspect or any one of the implementations of the second aspect is applied to a vehicle, and an execution body of the method includes but is not limited to the vehicle, a component in the vehicle, a chip in the vehicle, or an application that can be installed and run on the vehicle.

According to a third aspect, a track information exchange method is provided. The method is applied to a first server, and includes: receiving a vehicle verification request message from a first roadside device, where the vehicle verification request message includes verification information of a vehicle, and the first roadside device is located within a coverage area of the first server; verifying the vehicle based on the verification information; and sending a verification notification message to the first roadside device, where the verification notification message indicates whether the vehicle succeeds in the verification.

A server may manage a vehicle within coverage areas of one or more roadside devices. A processing capability of the server is strong, and the server may store verification information of a large number of vehicles, to provide a vehicle verification service for a large quantity of vehicles.

With reference to the third aspect, in some implementations of the third aspect, the method further includes: sending service vehicle information to the first roadside device, where the service vehicle information indicates a plurality of vehicles that have service receiving permission.

A storage capability of the server may be strong, and the server may store verification information of a large quantity of vehicles. The server may deliver verification information of a plurality of vehicles to the first roadside device in advance based on a specific communication situation, so that the roadside device can have a vehicle verification function. A quantity of signaling interaction times in a vehicle verification process tends to decrease. Therefore, vehicle verification efficiency and vehicle verification stability can be both guaranteed.

With reference to the third aspect, in some implementations of the third aspect, the service vehicle information is index information of the plurality of vehicles that the service receiving permission.

The server delivers an index for vehicle verification, so that signaling interaction overheads between the server and the roadside device are reduced, and vehicle verification efficiency is improved.

With reference to the third aspect, in some implementations of the third aspect, the method further includes: receiving an address and topology information of a second roadside device from a second server, where the second roadside device is located within a coverage area of the second server and outside the coverage area of the first server; and sending the address and the topology information of the second roadside device to the first roadside device.

The topology information and the address of the roadside device within the coverage area of the second server are subscribed to from the second server, so that efficient cross-server interaction is implemented between the first roadside device and the second roadside device.

With reference to the third aspect, in some implementations of the third aspect, the method further includes: sending an address and topology information of the first roadside device to a third server.

The topology information and the address of the roadside device within the coverage area of the first server are sent to the third server, so that efficient cross-server interaction is implemented between the first roadside device and a roadside device within a coverage area of the third server.

The method according to the third aspect or any one of the implementations of the third aspect is applied to the first server. An execution body of the method includes but is not limited to the first server, a component in the first server, a chip in the first server, or an application that can be installed and run on the first server.

According to a fourth aspect, a track information exchange method is provided. The method is applied to a second roadside device, and includes: sending first track information of a first traffic participant to a first roadside device, where the first track information indicates a first track outside a coverage area of the first roadside device.

With reference to the fourth aspect, in some implementations of the fourth aspect, the method further includes: receiving a first track request message from the first roadside device, where the first track request message is used to request track information obtained by the second roadside device; and the sending first track information to a first roadside device includes: sending a first track response message to the first roadside device in response to the first track request message, where the first track response message includes the first track information.

In an example, the first roadside device is located within the coverage area of a first server, and the second roadside device is located within a coverage area of a second server; and the method further includes: receiving an address and topology information of the first roadside device from the second server; and the sending a first track response message to the first roadside device includes: sending the first track response message to the first roadside device based on the address and the topology information of the first roadside device.

With reference to the fourth aspect, in some implementations of the fourth aspect, the method further includes: receiving a vehicle service request message from a vehicle, where the vehicle service request message includes verification information of the vehicle; and determining, based on the verification information, that the vehicle succeeds in verification.

The method according to the fourth aspect or any one of the implementations of the fourth aspect is applied to the second roadside device. An execution body of the method includes but is not limited to the second roadside device, a component in the second roadside device, a chip in the second roadside device, or an application that may be installed and run on the second roadside device.

According to a fifth aspect, an exchange method is provided. The method is applied to a third roadside device, and includes: receiving a vehicle service request message from a vehicle, where the vehicle service request message includes verification information of the vehicle; determining, based on the verification information, that the vehicle succeeds in verification; and sending a second verification notification message to a first roadside device, where the second verification notification message indicates that the vehicle succeeds in the verification.

In a possible scenario, the first roadside device is located within a coverage area of a first server, and the third roadside device is located within a coverage area of a third server; and the method further includes: receiving an address and topology information of the first roadside device from the third server; and the sending a second verification notification message to a first roadside device includes: sending the second verification notification message to the first roadside device based on the address and the topology information of the first roadside device.

The method according to the fifth aspect or any one of the implementations of the fifth aspect is applied to the first roadside device. An execution body of the method includes but is not limited to the third roadside device, a component in the third roadside device, a chip in the third roadside device, or an application that may be installed and run on the third roadside device.

According to a sixth aspect, an exchange method is provided. The method is applied to a fourth roadside device, and includes: sending a first handover request message to a first roadside device, where the first handover request message is used to request to hand over a service device of a vehicle from the fourth roadside device to the first roadside device; and receiving a first handover response message from the first roadside device, where the first handover response message indicates that the first roadside device becomes the service device of the vehicle.

In an example, a moment for sending the first handover request message may be a moment when the vehicle is located in an intersection area between a coverage area of the first roadside device and a coverage area of the fourth roadside device.

In a possible scenario, the first roadside device is located within a coverage area of a first server, and the fourth roadside device is located within a coverage area of a fourth server; and the method further includes: receiving an address and topology information of the first roadside device from the fourth server; and the sending a first handover request message to a first roadside device includes: sending the first handover request message to the first roadside device based on the address and the topology information of the first roadside device.

With reference to the sixth aspect, in some implementations of the sixth aspect, the method further includes: receiving a vehicle service request message from the vehicle, where the vehicle service request message includes verification information of the vehicle; and determining, based on the verification information, that the vehicle succeeds in verification.

The method according to the sixth aspect or any one of the implementations of the sixth aspect is applied to the fourth roadside device. An execution body of the method includes but is not limited to the fourth roadside device, a component in the fourth roadside device, a chip in the fourth roadside device, or an application that may be installed and run on the fourth roadside device.

According to a seventh aspect, a track information exchange apparatus is provided. The apparatus is used in a first roadside device, and includes: a receiving unit, configured to receive a vehicle service request message from a vehicle, where the vehicle service request message includes verification information of the vehicle; a processing unit, configured to determine, based on the verification information, that the vehicle succeeds in verification, where the receiving unit is further configured to receive first track information of a first traffic participant from a second roadside device, where the first track information indicates a first track outside a coverage area of the first roadside device; and a sending unit, configured to send a track forwarding message to the vehicle, where the track forwarding message indicates the first track.

With reference to the seventh aspect, in some implementations of the seventh aspect, the sending unit is further configured to send a vehicle verification request message to a first server, where the vehicle verification request message includes the verification information; the receiving unit is further configured to receive a first verification notification message from the first server, where the first verification notification message indicates whether the vehicle succeeds in the verification; and the processing unit is specifically configured to determine, based on the first verification notification message indicating that the vehicle succeeds in the verification, that the vehicle succeeds in the verification.

With reference to the seventh aspect, in some implementations of the seventh aspect, the receiving unit is further configured to receive service vehicle information from a first server, where the service vehicle information indicates a plurality of vehicles that have service receiving permission; and the processing unit is specifically configured to: determine, based on the verification information and the service vehicle information, whether the vehicle belongs to the plurality of vehicles that have the service receiving permission; and determine, based on a determining result that the vehicle belongs to the plurality of vehicles that have the service receiving permission, that the vehicle succeeds in the verification.

With reference to the seventh aspect, in some implementations of the seventh aspect, the service vehicle information is index information of the plurality of vehicles that have the service receiving permission, and the track forwarding message is a periodic non-repetitive message; the receiving unit is further configured to receive, from the first server, a verification failure message indicating that the vehicle fails in the verification; and the processing unit is further configured to stop sending the track forwarding message to the vehicle based on the verification failure message.

With reference to the seventh aspect, in some implementations of the seventh aspect, the receiving unit is further configured to receive a second verification notification message from a third roadside device, where the second verification notification message indicates that the vehicle succeeds in the verification; and the processing unit is specifically configured to determine, based on the verification message and the second verification notification message, that the vehicle succeeds in the verification.

With reference to the seventh aspect, in some implementations of the seventh aspect, before the sending unit sends the track forwarding message to the vehicle, the receiving unit is further configured to receive a first handover request message from a fourth roadside device, where the first handover request message is used to request to hand over a service device of the vehicle from the fourth roadside device to the first roadside device; and the sending unit is further configured to send a first handover response message to the fourth roadside device in response to the first handover request message, where the first handover response message indicates that the first roadside device becomes the service device of the vehicle.

With reference to the seventh aspect, in some implementations of the seventh aspect, the first roadside device is located within a coverage area of the first server, the fourth roadside device is located within a coverage area of a second server, and the first server is different from the second server; the receiving unit is further configured to receive an address and topology information of the fourth roadside device from the first server; and the sending unit is specifically configured to send the first handover response message to the fourth roadside device based on the address and the topology information of the fourth roadside device.

With reference to the seventh aspect, in some implementations of the seventh aspect, the sending unit is further configured to send a first track request message to the second roadside device, where the first track request message is used to request track information obtained by the second roadside device; and the receiving unit is specifically configured to receive a first track response message from the second roadside device in response to the first track request message, where the first track response message includes the first track information.

With reference to the seventh aspect, in some implementations of the seventh aspect, before the sending unit sends the first track request message to the second roadside device, the processing unit is further configured to determine a beyond-line-of-sight sensing range; and the processing unit is further configured to determine the second roadside device based on the beyond-line-of-sight sensing range and a distance between a plurality of roadside devices, where the plurality of roadside devices include the first roadside device and the second roadside device, and the beyond-line-of-sight sensing range is larger than the coverage area of the first roadside device.

With reference to the seventh aspect, in some implementations of the seventh aspect, the first roadside device further includes a receiving unit, where the receiving unit is configured to obtain second track information of a second traffic participant, where the second track information indicates a second track; and the sending unit is further configured to send the second track information to a fifth roadside device.

With reference to the seventh aspect, in some implementations of the seventh aspect, the receiving unit is further configured to receive a second track request message from the fifth roadside device, where the second track request message is used to request track information obtained by the first roadside device; and the sending unit is specifically configured to send a second track response message to the fifth roadside device in response to the second track request message, where the second track response message includes the second track information.

With reference to the seventh aspect, in some implementations of the seventh aspect, the sending unit is further configured to send a third verification notification message to a sixth roadside device, where the third verification notification message indicates that the vehicle succeeds in the verification.

With reference to the seventh aspect, in some implementations of the seventh aspect, the sending unit is further configured to send a second handover request message to a seventh roadside device, where the second handover request message is used to request to hand over the service device of the vehicle from the roadside device to the seventh roadside device; and the receiving unit is further configured to receive a second handover response message from the seventh roadside device, where the second handover response message indicates that the seventh roadside device becomes the service device of the vehicle.

According to an eighth aspect, a track information exchange apparatus is provided. The apparatus is applied to a vehicle, and includes: a sending unit, configured to send a vehicle service request message to a first roadside device, where the vehicle service request message includes verification information of the vehicle; and a receiving unit, configured to receive track information from the first roadside device, where the track information indicates a track outside a coverage area of the first roadside device.

With reference to the eighth aspect, in some implementations of the eighth aspect, the track information indicates one or more of the following: a traffic participant identifier, sensing time, a traffic participant type, a traffic participant appearance, a traffic participant model, a traffic participant license plate number, a location, a moving speed, and a moving direction.

With reference to the eighth aspect, in some implementations of the eighth aspect, the sending unit is further configured to send beyond-line-of-sight sensing range indication information to the first roadside device, where the beyond-line-of-sight sensing range indication information indicates a beyond-line-of-sight sensing range requested by the vehicle.

With reference to the eighth aspect, in some implementations of the eighth aspect, the sending unit is further configured to: when a service device of the vehicle is the first roadside device and after the vehicle enters a coverage area of a second roadside device, send a second vehicle service request message to the second roadside device, where the second vehicle service request message includes the verification information of the vehicle.

According to a ninth aspect, a track information exchange apparatus is provided. The apparatus is applied to a server, and includes: a receiving unit, configured to receive a vehicle verification request message from a first roadside device, where the vehicle verification request message includes verification information of a vehicle, and the first roadside device is located within a coverage area of the server; a processing unit, configured to verify the vehicle based on the verification information; and a sending unit, configured to send a verification notification message to the first roadside device, where the verification notification message indicates whether the vehicle succeeds in the verification.

With reference to the ninth aspect, in some implementations of the ninth aspect, the sending unit is further configured to send service vehicle information to the first roadside device, where the service vehicle information indicates a plurality of vehicles that have service receiving permission.

With reference to the ninth aspect, in some implementations of the ninth aspect, the service vehicle information is index information of the plurality of vehicles that the service receiving permission.

With reference to the ninth aspect, in some implementations of the ninth aspect, the receiving unit is further configured to receive an address and topology information of a second roadside device from a second server, where the second roadside device is located within a coverage area of the second server and outside the coverage area of the server; and the sending unit is further configured to send the address and the topology information of the second roadside device to the first roadside device.

With reference to the ninth aspect, in some implementations of the ninth aspect, the method further includes that the sending unit is further configured to send an address and topology information of the first roadside device to a third server.

According to a tenth aspect, a track information exchange apparatus is provided. The apparatus is applied to a roadside device, and includes: a sending unit, configured to send first track information of a first traffic participant to a first roadside device, where the first track information indicates a first track outside a coverage area of the first roadside device.

With reference to the tenth aspect, in some implementations of the tenth aspect, the roadside device further includes: a receiving unit, configured to receive a first track request message from the first roadside device, where the first track request message is used to request track information obtained by the roadside device, and the sending unit is specifically configured to send a first track response message to the first roadside device in response to the first track request message, where the first track response message includes the first track information.

With reference to the tenth aspect, in some implementations of the tenth aspect, the roadside device further includes: a receiving unit, configured to receive a vehicle service request message from a vehicle, where the vehicle service request message includes verification information of the vehicle; and a processing unit, configured to determine, based on the verification information, that the vehicle succeeds in verification.

According to an eleventh aspect, a track information exchange apparatus is provided. The apparatus is applied to a roadside device, and includes: a receiving unit, configured to receive a vehicle service request message from a vehicle, where the vehicle service request message includes verification information of the vehicle; a processing unit, configured to determine, based on the verification information, that the vehicle succeeds in verification; and a sending unit, configured to send a second verification notification message to a first roadside device, where the second verification notification message indicates that the vehicle succeeds in the verification.

According to a twelfth aspect, a track information exchange apparatus is provided. The apparatus is applied to a roadside device, and includes: a sending unit, configured to send a first handover request message to a first roadside device, where the first handover request message is used to request to hand over a service device of a vehicle from the fourth roadside device to the first roadside device; and a receiving unit, configured to receive a first handover response message from the first roadside device, where the first handover response message indicates that the first roadside device becomes the service device of the vehicle.

With reference to the twelfth aspect, in some implementations of the twelfth aspect, the receiving unit is further configured to receive a vehicle service request message from the vehicle, where the vehicle service request message includes verification information of the vehicle; and the roadside device further includes: a processing unit, configured to determine, based on the verification information, that the vehicle succeeds in verification.

According to a thirteenth aspect, a track information exchange method is provided, including: receiving, by a first roadside device, track information of a traffic participant from a second roadside device, where the track information is used to indicate a track outside a coverage area of the first roadside device; and sending, by the first roadside device, a track forwarding message to a vehicle, where the track forwarding message indicates the track.

An execution body of the method according to the thirteenth aspect or any one of the implementations of the thirteenth aspect includes but is not limited to the first roadside device, a component in the first roadside device, a chip in the first roadside device, or an application that may be installed and run on the first roadside device.

According to a fourteenth aspect, a track information exchange apparatus is provided, including a processor and a memory, where the memory is configured to store a computer program, and the processor is configured to execute the computer program stored in the memory, so that the exchange apparatus is enabled to implement the exchange method according to any one of the possible implementations of the first aspect to the sixth aspect.

According to a fifteenth aspect, a computer program product is provided, including computer instructions. When the computer program product runs on a processor, the exchange method according to any one of the possible implementations of the first aspect to the sixth aspect is implemented.

According to a sixteenth aspect, a computer-readable storage medium is provided, where the computer-readable medium stores computer instructions, and when the computer instructions are run on a processor, the exchange method according to any one of the possible implementations of the first aspect to the sixth aspect is implemented.

### BRIEF DESCRIPTION OF DRAWINGS

FIG. 1 is a schematic diagram of a structure of an internet of vehicles interaction scenario according to an embodiment of this application;
FIG. 2 is a schematic diagram of a structure of another internet of vehicles interaction scenario according to an embodiment of this application;
FIG. 3 is a diagram of a system architecture of internet of vehicles interaction according to an embodiment of this application;
FIG. 4 is a flowchart of a track information exchange method according to an embodiment of this application;
FIG. 5 is a flowchart of a track information exchange method according to an embodiment of this application;
FIG. 6 is a flowchart of a track information exchange method according to an embodiment of this application;
FIG. 7 is a flowchart of a track information exchange method according to an embodiment of this application;
FIG. 8 is a flowchart of a track information exchange method according to an embodiment of this application;
FIG. 9 is a schematic diagram of a principle of determining a roadside device based on a beyond-line-of-sight sensing range according to an embodiment of this application;
FIG. 10 is a schematic diagram of a principle of determining a roadside device based on a beyond-line-of-sight sensing range according to an embodiment of this application;
FIG. 11 is a schematic diagram of a principle of determining a roadside device based on a beyond-line-of-sight sensing range according to an embodiment of this application;
FIG. 12 is a schematic diagram of a principle of determining a roadside device based on a beyond-line-of-sight sensing range according to an embodiment of this application;
FIG. 13 is a schematic diagram of a principle of determining a roadside device based on a beyond-line-of-sight sensing range according to an embodiment of this application;
FIG. 14 is a schematic diagram of a principle of determining a roadside device based on a beyond-line-of-sight sensing range according to an embodiment of this application;
FIG. 15 is a flowchart of a track information exchange method according to an embodiment of this application;
FIG. 16 is a schematic diagram of a structure of an exchange apparatus according to an embodiment of this application; and
FIG. 17 is a schematic diagram of a structure of an exchange apparatus according to an embodiment of this application.

### DESCRIPTION OF EMBODIMENTS

The following describes the technical solutions of this application with reference to the accompanying drawings.

In this application, "at least one" refers to one or more, and "a plurality of" refers to two or more. The term "and/or" describes an association relationship between associated objects and may indicate three relationships. For example, A and/or B may indicate the following cases: Only A exists, both A and B exist, and only B exists. A and B may be singular or plural. The character "/" usually indicates an "or" relationship between the associated objects. "At least one item (piece) of the following" or a similar expression thereof means any combination of the items, including any combination of singular items (pieces) or plural items (pieces). For example, at least one of a, b, or c may represent a, b, c, a and b, a and c, b and c, or a, b, and c. a, b, and c each may be singular or plural. In addition, in embodiments of this application, terms such as "first" and "second" are used to distinguish different description objects, but are not used to limit a sequence of a plurality of description objects, are not used to limit a quantity of description objects, and are not used to distinguish different entity objects. For example, "first information" is not necessarily prior to "second information"; "first information" may be one piece of information, or may be a plurality of pieces of information. In actual implementation, "first information" and "second information" may be same information, or may be different information. In addition, in embodiments of this application, numbers such as "301", "402", and "503" are merely used as identifiers for ease of description, and do not limit a sequence of performing steps.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

V2X is a key technology for an intelligent transportation system. V2X communication may include communication manners such as vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication. Through V2X communication, a series of track information such as a real-time road condition, road information, and pedestrian information may be obtained, to improve traveling safety, reduce congestion, improve traffic efficiency, and provide vehicle-mounted entertainment information.

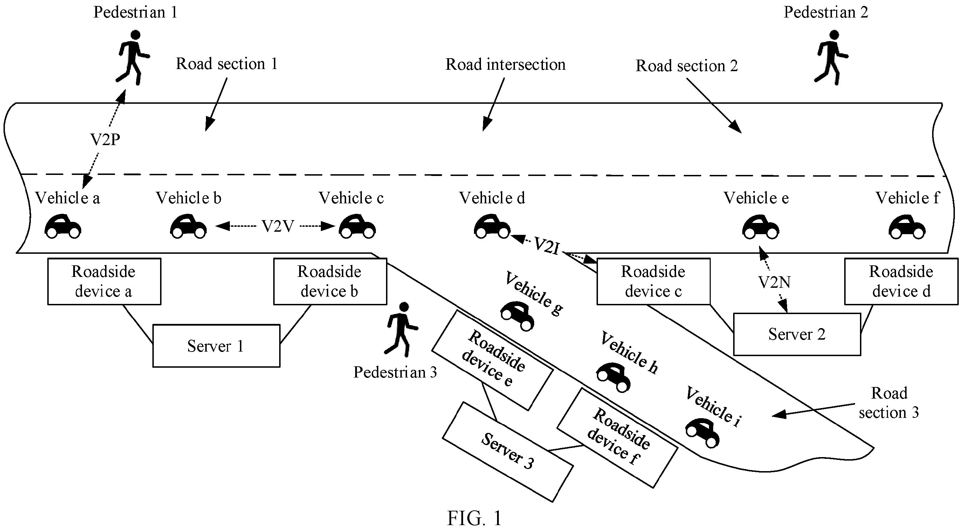

The following describes a possible internet of vehicles (vehicle to everything, V2X) interaction scenario according to an embodiment of this application by using an example shown in FIG. 1.

FIG. 1 shows several vehicles (including a vehicle a to a vehicle i), several roadside devices (including a roadside device a to a roadside device f), several servers (including a server 1 to a server 3), and several pedestrians (including a pedestrian 1 to a pedestrian 3). It should be understood that FIG. 1 is merely a schematic diagram of the internet of vehicles interaction scenario according to this embodiment of this application. Embodiments of this application may be applied to an internet of vehicles interaction scenario including more or fewer vehicles, or may be applied to an internet of vehicles interaction scenario including more or fewer roadside devices, or may be applied to an internet of vehicles interaction scenario including more or fewer servers, or may be applied to an internet of vehicles interaction scenario including more or fewer pedestrians. This is not limited in this application.

The vehicle may travel on a road, for example, a road section 1, a road section 2, and a road section 3 shown in FIG. 1. The road section 1, the road section 2, and the road section 3 may interact with each other at a road intersection. In a possible example, a vehicle on the road section 1 may enter the road section 2 or the road section 3 through the road intersection. In another possible example, a vehicle on the road section 2 may enter the road section 1 or the road section 3 through the road intersection. In still another possible example, a vehicle on the road section 3 enters the road section 1 or the road section 2 through the road intersection.

In a process in which the vehicle travels on the road, the vehicle may interact with an internet of vehicles communication device.

The internet of vehicles communication device may include a roadside device. Communication between the vehicle and the roadside device may be V2I communication. The roadside device may refer to roadside infrastructure. For example, the roadside device may be a roadside edge computing (roadside edge computing, REC) device or a roadside unit (roadside unit, RSU), or may be a device that integrates an REC and an RSU. For example, the REC may obtain various types of service information and provide the service information to the vehicle, such as road condition information, parking charges, and in-vehicle entertainment. For another example, the RSU may provide access to a data network for the vehicle.

The roadside device may be disposed on a roadside. The roadside device may obtain track information of a traffic participant located within a coverage area. The coverage area of the roadside device is limited. A plurality of roadside devices may be disposed on a same road section, each roadside device may monitor one area of the road section, and a plurality of roadside devices may separately monitor a plurality of areas of the road section.

In the example shown in FIG. 1, the roadside device a and the roadside device b may be disposed on the road section 1. The roadside device a and the roadside device b may obtain track information of a traffic participant on the road section 1. For example, the roadside device a may obtain track information of the vehicle a, the vehicle b, and the pedestrian 1, and the roadside device b may obtain track information of the vehicle b and the vehicle c.

The roadside device c and the roadside device d may be disposed on the road section 2. The roadside device c and the roadside device d may obtain track information of a traffic participant on the road section 2. For example, the roadside device c may obtain track information of the vehicle e, and the roadside device d may obtain track information of the vehicle e, the vehicle f, and the pedestrian 2.

The roadside device e and the roadside device f may be disposed on the road section 3. The roadside device e and the roadside device f may obtain track information of a traffic participant on the road section 3. For example, the roadside device e may obtain track information of the vehicle g and the pedestrian 3, and the roadside device d may obtain track information of the vehicle h and the vehicle i.

The roadside device b may be a roadside device that is on the road section 1 and that is near the road intersection. Optionally, the roadside device b may further obtain track information of a traffic participant located in an area that is on the road section 1 and that is near the road intersection. Optionally, the roadside device b may further obtain track information of a traffic participant located at the road intersection. For example, the roadside device b may obtain track information of the vehicle d.

The roadside device c may be a roadside device that is on the road section 2 and that is near the road intersection. Optionally, the roadside device c may further obtain track information of a traffic participant located in an area that is on the road section 2 and that is near the road intersection. Optionally, the roadside device c may further obtain the track information of the traffic participant located at the road intersection. For example, the roadside device c may obtain the track information of the vehicle d.

The roadside device e may be a roadside device that is on the road section 3 and that is near the road intersection. Optionally, the roadside device e may further obtain track information of a traffic participant located in an area that is on the road section 3 and that is near the road intersection. Optionally, the roadside device e may further obtain the track information of the traffic participant located at the road intersection. For example, the roadside device e may obtain the track information of the vehicle d.

It should be understood that the foregoing description is merely an example for describing the scenario shown in FIG. 1. In another possible example, the roadside device may obtain more or fewer traffic participants. This is not limited in this application.

The internet of vehicles communication device may include a vehicle. Communication between vehicles may be V2V communication. For example, the vehicle may broadcast information such as a vehicle speed, a traveling direction, a specific location, and whether an emergency brake is performed to a surrounding vehicle. After obtaining such information, a driver of the surrounding vehicle can better perceive traffic conditions beyond a line of sight, to predict and avoid dangerous conditions. Vehicle communication may be implemented by any one of the following: a vehicle, a vehicle-mounted machine, a vehicle-mounted terminal, an on-board computer (On-board computer, or On-board PC), a vehicle-mounted chip, a vehicle-mounted device, and the like.

In an internet of vehicles interaction scenario, V2V communication may be performed between vehicles that are close to each other. With reference to the example shown in FIG. 1, V2V communication may be performed between two vehicles in the vehicle a to the vehicle i in FIG. 1. As shown in FIG. 1, communication between the vehicle b and the vehicle c may be V2V communication.

The internet of vehicles communication device may include a server. Communication between the vehicle and the server may be V2N communication. For example, the vehicle may report verification information of the vehicle to the server, and the server may perform validity verification on the vehicle based on the verification information of the vehicle. The vehicle may directly communicate with the server, or may communicate with the server by using, for example, an access network device (such as a base station) or a core network device.

The server may be responsible for a related service of vehicle-road collaboration within a coverage area of the server. The server may manage a roadside device located within the coverage area of the server. For example, the server may manage an address and topology information of the roadside device. The roadside device located within the coverage area of the server may be mapped to the server. The server may interact with the roadside device located within the coverage area of the server. Optionally, the server may manage all roadside devices on a road section.

In the example shown in FIG. 1, the roadside device a and the roadside device b may be located within a coverage area of the server 1. The roadside device c and the roadside device d may be located within a coverage area of the server 2. The roadside device e and the roadside device f may be located within a coverage area of the server 3.

The server may subscribe to information from another server to obtain information within a coverage area of the another server. For example, the information may include track information obtained by a roadside device, topology information of the roadside device, an address of the roadside device, verification information of the vehicle, and the like.

With reference to FIG. 1, in an example, the server 1 and the server 2 may subscribe to topology information and addresses of roadside devices from each other. For example, the server 1 may subscribe to topology information and an address of the roadside device c and topology information and an address of the roadside device d from the server 2. The server 2 may subscribe to topology information and an address of the roadside device a and topology information and an address of the roadside device b from the server 1.

The internet of vehicles communication device may include a terminal device. The terminal device may be a terminal device carried by a user. Communication between the vehicle and the terminal device may be V2P communication. The terminal device may be, for example, UE (User Equipment, user equipment), an MS (Mobile Station, mobile station), a mobile terminal (Mobile Terminal), or an electronic label (V2X license plate, which is a license plate with a V2X communication function). Optionally, the terminal device may be a wearable device, a mobile phone, a tablet computer, a PDA (Personal Digital Assistant, personal digital assistant), a POS (Point of Sales, sales terminal), a vehicle-mounted computer, or the like. With reference to FIG. 1, in an example, the vehicle a may perform V2P communication with the pedestrian 1.

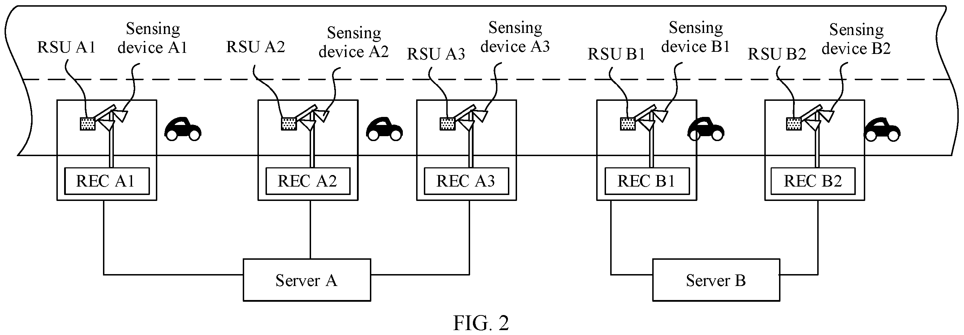

The following describes another possible internet of vehicles interaction scenario according to an embodiment of this application by using an example shown in FIG. 2. For example, a road shown in FIG. 2 may correspond to one or more of the road section 1, the road section 2, and the road section 3 shown in FIG. 1.

One or more RECs may be disposed on a road side, such as an REC A1, an REC A2, an REC A3, an REC B1, and an REC B2 shown in FIG. 2. The REC may have a computing capability. Because the REC is located on the roadside, the REC can obtain traffic-related information on the road in a timely manner and quickly respond to the obtained information.

One or more sensing devices may also be disposed on the roadside, such as a sensing device A1, a sensing device A2, a sensing device A3, a sensing device B1, and a sensing device B2. The sensing device may be configured to obtain real-time track information on the road. The sensing device may be, for example, an apparatus like a camera, a radar, or a video camera. The sensing device and the REC may communicate with each other. The track information captured by the sensing device may be sent to the REC in real time. For example, as shown in FIG. 2, the REC A2 is used as an example. The REC A2 may obtain, from the sensing device A2, track information captured by the sensing device A2. For related descriptions of another REC provided in this embodiment of this application, refer to descriptions of the REC A2 shown in FIG. 2.

Optionally, one REC may obtain track information on the road through one or more sensing devices. In other words, one REC may correspond to one or more sensing devices. In this case, an overall sensing range of the one or more sensing devices may correspond to a coverage area of the REC. Track information captured by the one or more sensing devices may indicate track information within the coverage area of the REC.

Optionally, one sensing device may send captured track information to one or more RECs. In other words, one sensing device may correspond to one or more RECs.

The REC may communicate with another internet of vehicles communication device (for example, a vehicle, a server, or a roadside device) through one or more RSUs. In this case, an overall communication range of the one or more RSUs may correspond to a communication range of the REC. The one or more RSUs may correspond to the REC. For example, as shown in FIG. 2, the REC A1 is used as an example. The REC A1 may interact with a vehicle, a server A, an RSU A2, an RSU A3, and the like through an RSU A1. The RSU A1 may correspond to the REC A1. The REC B1 is used as an example. The REC B1 may interact with a vehicle, a server B, an RSU B2, and the like through an RSU B1. The REC B1 may correspond to the REC B1. For related descriptions of another REC provided in this embodiment of this application, refer to descriptions of the REC A1 or the REC B1 shown in FIG. 2.

Interaction between the RSU A1 and the RSU A2 is used as an example. The RSU A1 is an RSU device corresponding to the REC A1. The RSU A2 is an RSU device corresponding to the REC A2. Therefore, the REC A1 may obtain information from the REC A2 through interaction between the RSU A1 and the RSU A2. Alternatively, the REC A1 may send information to the REC A2 through interaction between the RSU A1 and the RSU A2. For related descriptions of interaction between other RSUs provided in this embodiment of this application, refer to descriptions of the RSU A1 and the RSU A2 shown in FIG. 2.

In an example, both the REC and the RSU may be roadside devices. For example, the REC A1 is used as an example. The REC A1 may correspond to any one of the roadside device a to the roadside device f shown in FIG. 1. For another example, the RSU A1 is used as an example. The RSU A1 may correspond to any one of the roadside device a to the roadside device f shown in FIG. 1. In another example, the roadside device may include an REC and an RSU, or may include a module or a unit configured to implement functions of an REC and an RSU. For example, the REC A1 and the RSU A1 are used as an example. A device having the REC A1 and the RSU A1 may correspond to any one of the roadside device a to the roadside device f shown in FIG. 1. For related descriptions of a relationship between another RSU, another REC, and another roadside device provided in this embodiment of this application, refer to descriptions of the REC A1 and the RSU A1 shown in FIG. 2.

The server can manage roadside devices within the coverage area. With reference to the example shown in FIG. 2, the server A is used as an example. For example, the server A may manage the REC A1, the REC A2, and the REC A3, or may manage the RSU A1, the RSU A2, and the RSU A3, or may manage roadside devices (or systems) including the REC A1 and the RSU A1, roadside devices (or systems) including the REC A2 and the RSU A2, and roadside devices (or systems) including the REC A3 and the RSU A3. For example, the server A shown in FIG. 2 may correspond to any one of the server 1, the server 2, and the server 3 shown in FIG. 1. For related descriptions of another server provided in this embodiment of this application, refer to the description of the server A shown in FIG. 2.

Optionally, the RSU or REC may further perform cross-server interaction. The following uses interaction between the REC A1 and the REC B1 as an example for description. For related descriptions of cross-server interaction between other RECs provided in this embodiment of this application, refer to descriptions of the REC A1 and the REC B1 shown in FIG. 2.

For example, the REC A1 may obtain information from the REC B 1 through interaction between the RSU A1 and the server A, interaction between the server A and the server B, and interaction between the server B and the RSU B1. Alternatively, the REC A1 may send information to the REC B1 through interaction between the RSU A1 and the server A, interaction between the server A and the server B, and interaction between the server B and the RSU B1.

For another example, the server A may subscribe to an address and topology information of the RSU B1 from the server B. The server B may subscribe to an address and topology information of the RSU A1 from the server A. The REC A1 may send, based on the address and the topology information of the RSU B1, information to the REC B1 through interaction between the RSU A1 and the RSU B1. The REC B1 may send, based on the address and the topology information of the RSU A1, information to the REC A1 through interaction between the RSU A1 and the RSU B1.

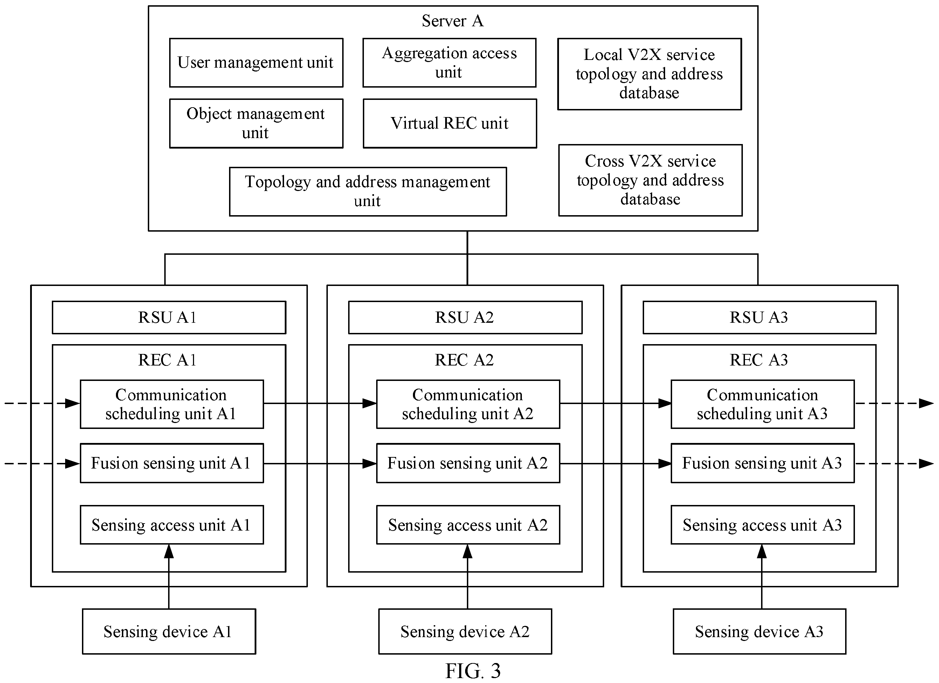

FIG. 3 is a diagram of a system architecture of internet of vehicles interaction according to an embodiment of this application.

The system may include one or more servers (a server A shown in FIG. 3), one or more RSUs (an RSU A1, an RSU A2, and an RSU A3 shown in FIG. 3), one or more RECs (an REC A1, an REC A2, and an REC A3 shown in FIG. 3), and one or more sensing devices (a sensing device A1, a sensing device A2, and a sensing device A3 shown in FIG. 3). For example, the server shown in FIG. 3 may correspond to any one of the server 1 to the server 3 shown in FIG. 1, or may correspond to either of the server A and the server B shown in FIG. 2. For example, the RSU shown in FIG. 3 may correspond to any one of the roadside device a to the roadside device f shown in FIG. 1, or may correspond to any one of the RSU A1 to the RSU A3, the RSU B1, and the RSU B2 shown in FIG. 2. For example, the REC shown in FIG. 3 may correspond to any one of the roadside device a to the roadside device f shown in FIG. 1, or may correspond to any one of the RSU A1 to the RSU A3, the RSU B1, and the RSU B2 shown in FIG. 2. For example, the sensing device shown in FIG. 3 may correspond to any one of the sensing device A1 to the sensing device A3, the sensing device B 1, and the sensing device B2 shown in FIG. 2.

A system architecture of a server according to an embodiment of this application is described by using the server A shown in FIG. 3 as an example. For related descriptions of another server provided in this embodiment of this application, refer to the description of the server A shown in FIG. 3.

The server A may include, for example, a user management unit, an obj ect management unit, an aggregation access unit, a virtual REC unit, a topology and address management unit, a database, and the like. In another possible example, the server A may include more or fewer units, or may implement more or fewer functions.

The user management unit may be configured to provide a service such as account creation, account cancellation, and vehicle qualification verification for a vehicle. An account may be, for example, an electronic account with a consumption function. The vehicle qualification verification may be used to verify validity of internet of vehicles communication performed by the vehicle. For example, the user management unit may receive a vehicle verification message reported by a roadside device, and send a vehicle verification result to the roadside device.

The object management unit may, for example, be configured to manage (for example, assign, inherit, delete, or update) information (for example, an identifier, and track information) of a traffic participant. The track information of the traffic participant may be obtained, for example, from a roadside device.

The aggregation access unit may obtain information from an internet of vehicles communication device (for example, a roadside device, a vehicle, or a terminal device). For example, the aggregation access unit may be configured to obtain and aggregate data from a plurality of RECs, and process the data from the plurality of RECs, to implement a global management function.

The virtual REC unit may be configured to implement mapping of the REC on a V2X service. The virtual REC unit may be configured to manage a roadside device located within a coverage area of the server A.

The topology and address management unit may be configured, for example, to maintain an address and topology information of a roadside device. For example, the topology and address management unit may manage (for example, add, update, or delete) an address and topology information of a roadside device managed by the server A. For another example, the topology and address management unit may subscribe to an address and topology information of a roadside device managed by another server.

The database may be configured to store data, such as account information, and information obtained by the aggregation access unit. The database may include, for example, a local V2X service topology and address database, and a cross V2X service topology and address database. The local V2X service topology and address database may be used to store an address and topology information of a local roadside device. The cross V2X service topology and address database may be used to store an address and topology information of a roadside device subscribed from another server.

In the example shown in FIG. 3, the REC A1, the REC A2, and the REC A3 may be located within the coverage area of the server A and managed by the server A. The following describes a system architecture of an REC provided in this embodiment of this application by using the REC A2 as an example. For related descriptions of another REC provided in this embodiment of this application, refer to descriptions of the REC A2 shown in FIG. 3.

The REC A2 may include a communication scheduling unit A2, a sensing access unit A2, and a fusion sensing unit A2. In another possible example, the REC A2 may include more or fewer units, or may implement more or fewer functions. In a possible example, the REC A2 and the RSU A2 may form a roadside device managed by the server A. In another possible example, the REC A2 and the RSU A2 may be independent of each other.

The communication scheduling unit A2 of the REC A2 may be configured to interact with a vehicle, a terminal device, another roadside device (such as the RSU A1 and the RSU A3 in FIG. 3) and a server (such as the server A in FIG. 3) through the RSU A2, so that the REC A2 may interact with an internet of vehicles communication device located within a communication range of the REC A2. In another example, the communication scheduling unit A2 may be implemented by the RSU A2. For example, the communication scheduling unit A2 may be configured to implement functions such as vehicle verification, vehicle activation, vehicle deactivation, REC handover, track information subscription to another REC, and track information subscription by another REC.

The sensing access unit A2 of the REC A2 may be configured to obtain track information captured by a sensing device (for example, the sensing device A2). For example, the REC A2 may have a sensing interface connected to the sensing device A2. The sensing access unit A2 may receive the track information from the sensing device A2 through the sensing interface. An overall coverage area of one or more sensing devices connected to the sensing access unit A2 of the REC A2 may correspond to a coverage area of the REC A2. For example, the sensing access unit A2 may be configured to implement functions such as vehicle verification, vehicle activation, vehicle deactivation, REC handover, track information subscription to another REC, and track information subscription by another REC.

The following describes an application of the sensing device in this embodiment of this application by using the sensing device A2 shown in FIG. 3 as an example. For related descriptions of another sensing device provided in this embodiment of this application, refer to descriptions of the sensing device A2 shown in FIG. 3. In an example, the sensing device A2 may be a device such as a camera or a radar. For example, the camera may capture related information of a motor vehicle, a non-motorized vehicle, a pedestrian, and the like by shooting an image or a video. The related information may include, for example, one or more of the following: a color, a shape, a size, a license plate, and a model of the motor vehicle or the non-motorized vehicle, a pedestrian dress, a pedestrian physical characteristic, pedestrian identity information, and the like. For another example, the radar may determine a location, a moving speed, a moving direction, and the like of the motor vehicle, the non-motorized vehicle, the pedestrian, and the like.

The fusion sensing unit A2 of the REC A2 may be configured to exchange track information with another roadside device (such as the REC A1 and the REC A3) through the RSU A2. The fusion sensing unit A2 may further process the obtained track information. The fusion sensing unit A2 may also generate other information related to the track information. For example, the fusion sensing unit A2 may be configured to allocate traffic participant indication information to a sensed traffic participant (where the traffic participant indication information may refer to, for example, an identifier of the traffic participant). For another example, the fusion sensing unit A2 may be configured to obtain track information from an upper-level REC (for example, the fusion sensing unit A1 of the REC A1 shown in FIG. 3), and may transfer the track information to a lower-level REC (for example, the fusion sensing unit A3 of the REC A3 shown in FIG. 3). For another example, the fusion sensing unit A2 may be configured to recognize a moving track of a same traffic participant. For another example, the fusion sensing unit A2 may be configured to screen track information of a same traffic participant, and remove redundant track information.

With reference to FIG. 1 to FIG. 4, the following describes a track information exchange method according to an embodiment of this application.

401: A vehicle sends a vehicle service request message of the vehicle to a first roadside device, where the vehicle service request message includes verification information of the vehicle.

Correspondingly, the first roadside device receives the vehicle service request message from the vehicle.

402: The first roadside device determines, based on the verification information, whether the vehicle succeeds in verification.

The vehicle service request message may be used to request the first roadside device to provide a service for the vehicle, for example, deliver track information. Optionally, for example, the vehicle service request message may be further used to establish a connection between the vehicle and the first roadside device.

For example, the verification of the vehicle may be independently completed by the first roadside device, or may be completed by the first roadside device with assistance of a server.

401 and 402 help establish a communication connection between the vehicle and the roadside device. In other words, the roadside device may send information to a specific vehicle. Optionally, the roadside device may further obtain feedback information reported by the vehicle. This helps establish an association between the track information and the vehicle. Because the roadside device can provide a traffic service for the specific vehicle, an operator can properly collect a fee generated by the traffic service. 401 and 402 may be, for example, optional steps.

When the first roadside device determines that the vehicle succeeds in the verification, the first roadside device may perform the following steps.

403: The first roadside device sends a track request message to a second roadside device, where the track request message is used to request track information obtained by the second roadside device.

Correspondingly, the second roadside device receives the track request message from the first roadside device.

403 may be, for example, an optional step.

404: The second roadside device sends track information of a traffic participant to the first roadside device, where the track information indicates a track outside a coverage area of the first roadside device.

Correspondingly, the first roadside device receives the track information from the second roadside device.

405: The first roadside device sends a track forwarding message to the vehicle, where the track forwarding message includes the track information.

Correspondingly, the vehicle receives the track information from the first roadside device.

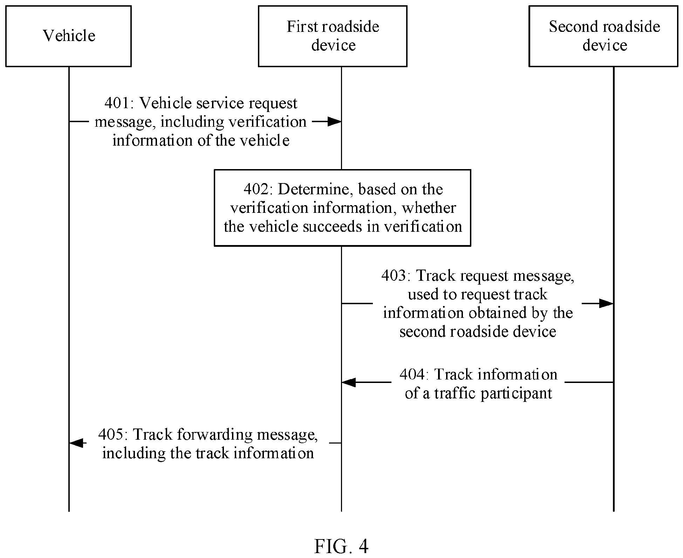

403 to 405 are described below with reference to FIG. 1 and FIG. 4.

The roadside device a may obtain, through a sensing device, track information a of one or more traffic participants located within the coverage area of the roadside device a. The one or more traffic participants within the coverage area of the roadside device a include the vehicle b and the pedestrian 1 shown in FIG. 1. For the roadside device a, the track information a within the coverage area of the roadside device a may be, for example, local track information.

The vehicle a may communicate with an internet of vehicles communication device within a line-of-sight sensing range of the vehicle a. For example, the roadside device a may be located within the line-of-sight sensing range of the vehicle a. Therefore, the roadside device a may send the track information a to the vehicle a in, for example, a broadcast manner, a multicast manner, or a unicast manner. The track information a may indicate a track of the vehicle b and a track of the pedestrian 1. Correspondingly, the vehicle a may obtain, from the roadside device a, the track information a within the coverage area of the roadside device a. The roadside device a may directly send the track information a to the vehicle a, or may send the track information a to the vehicle a through one or more relay devices. The one or more relay devices may forward the track information a to the vehicle a.

However, the vehicle a cannot obtain track information outside the line-of-sight range. The coverage area of the roadside device a may be limited, and may not meet a beyond-line-of-sight sensing requirement of the vehicle a. As shown in FIG. 1, the roadside device b may be located outside the line-of-sight sensing range of the vehicle a. How the vehicle a obtains track information within a coverage area of the roadside device b and track information within a coverage area of a further roadside device becomes a problem to be solved.

The roadside device b is used as an example. With reference to FIG. 1, the roadside device b may be located outside the line-of-sight range of the vehicle a and within a beyond-line-of-sight range of the vehicle a. The vehicle b and the vehicle c may be located within the coverage area of the roadside device b. The roadside device b may obtain track information b, and the track information b may indicate the track of the vehicle b and a track of the vehicle c. The track information b may be track information outside the coverage area of the roadside device a. The roadside device b may send the track information b to the roadside device a. The roadside device a may receive the track information b from the roadside device b, to obtain track information within the coverage area of the roadside device b. For the roadside device a, the track information within the coverage area of the roadside device b may be, for example, surrounding track information.

For example, the track information may include one or more of the following content: a traffic participant identifier, sensing time, a traffic participant type, a traffic participant appearance, a traffic participant model, a traffic participant license plate number, a location, a moving speed, and a moving direction. Representation of the track information may include, for example, an image, pixel data, code, a feature vector, and a result output by a track information processing module.

For example, sensing time information may indicate information about time at which a sensing device senses a traffic participant, or indicate time at which a roadside device obtains track information of a traffic participant.

The traffic participant type may include, for example, a motor vehicle, a non-motorized vehicle, a pedestrian, a truck, a bus, a large-sized vehicle, a medium-sized vehicle, and a small-sized vehicle

When the traffic participant is a vehicle, the traffic participant appearance may include, for example, a color, a size, and a shape of the vehicle. When the traffic participant is a pedestrian, the traffic participant appearance may include, for example, a pedestrian gender, a pedestrian dress (for example, a dress type and a dress color), and a body feature (for example, a height, a body shape, or a facial feature).

The traffic participant model may include, for example, a vehicle brand and a vehicle product label.

The traffic participant license plate number may include, for example, license plate information of a vehicle, and an identity number of a pedestrian.

The location may include, for example, longitude and latitude coordinates of a traffic participant, and a relative location on a road (for example, on a left side of the road and on a right side of the road).

The moving speed may include, for example, a traveling speed of a vehicle, and a walking speed of a pedestrian.

The moving direction may include, for example, a traveling direction angle of a vehicle, and a walking direction angle of a pedestrian.

In an example, the roadside device a may directly obtain the track information b of the roadside device b from the roadside device b. For example, the roadside device a and the roadside device b may be two adjacent roadside devices.

In another example, the roadside device a may obtain the track information b of the roadside device b through another roadside device. For example, a roadside device b' may further exist between the roadside device a and the roadside device b, and the roadside device b' may obtain the track information b from the roadside device b, and forward the track information b to the roadside device a. The track information within the coverage area of the roadside device b may, for example, be located outside a coverage area of the roadside device b'.

The track information may be transferred to the roadside device a through one or more roadside devices. For example, a roadside device i+1 may send track information i+1 obtained by the roadside device i+1 to a roadside device i. The roadside device i may summarize track information i obtained by the roadside device i and the track information i+1 sent by the roadside device i+1, and send summarized track information to a roadside device i-1. Optionally, if the track information i+1 and the track information i include track information of a same traffic participant, the roadside device i may discard track information related to the traffic participant in the track information i+1 or the track information i. The track information is transmitted level by level, so that the roadside device a may obtain summarized track information.

In addition to sending the track information b to the roadside device a, the roadside device b may further send, to the roadside device a, roadside device indication information indicating the roadside device b. The roadside device indication information indicating the roadside device b may indicate, for example, a source of the track information b.

Optionally, the roadside device a may send a track request message to the roadside device b. The track request message may request track information obtained by the roadside device b from the roadside device b. The roadside device b may send the track information b to the roadside device a based on a track response message for the track request message. The track response message may indicate the track information b. In an example, the track information b may be carried in the track response message.

Optionally, the track request message may include at least one piece of roadside device indication information a and roadside device indication information b. The track response message may include at least one piece of the roadside device indication information a and the roadside device indication information b. The roadside device indication information a may be indication information indicating the roadside device a, and the roadside device indication information b may be indication information indicating the roadside device b.

In an example, the roadside device indication information a may include an address and topology information of the roadside device a, and the roadside device indication information b may include an address and topology information of the roadside device b. The address of the roadside device a may be a source address of the track request message, and the address of the roadside device b may be a target address of the track request message. The roadside device a may send the track request message to the roadside device b based on the address and the topology information of the roadside device b. After receiving the track request message, the roadside device b may determine, based on the target address carried in the track request message, that the track request message is related to the roadside device b. The roadside device b may send the track response message to the roadside device a based on the source address and the topology information that are carried in the track request message.

In another example, the roadside device indication information a may include an identifier of the roadside device a, and the roadside device indication information b may include an identifier of the roadside device b. After receiving the track request message, the roadside device b may determine, based on a device identifier carried in the track request message, that the track request message is related to the roadside device b. The roadside device b may send the track response message, where the track response message may carry the identifier of the roadside device b and the identifier of the roadside device a, so that the roadside device a may determine, based on the device identifiers carried in the track response message, that the track response message is related to the roadside device a, and determine that the track information b carried in the track response message is from the roadside device b.

Optionally, after receiving the track response message from the roadside device b, the roadside device a may perform processing such as packet decapsulation, check, and de-redundancy on the track response message, to obtain the track information b. After obtaining the track information b from the roadside device b, the roadside device a may indicate the track indicated by the track information b to the vehicle a by using the track forwarding message. In other words, the roadside device a may send the track information b to the vehicle a. For example, the roadside device a may perform processing such as check block coding, redundancy addition, and packet encapsulation on data of the track indicated by the track information b, to obtain the track forwarding message. Correspondingly, the vehicle a may receive the track forwarding message from the roadside device a, to obtain the track indicated by the track information b. In other words, the vehicle a may receive the track information b from the roadside device a.

The roadside device a may send the track forwarding message in a broadcast manner, a multicast manner, a unicast manner, or the like, so that the vehicle a may obtain the track information b from the roadside device a.

For example, the roadside device a may periodically broadcast the track forwarding message, to indicate the track information (which may include track information within the coverage area of the roadside device a, and track information outside the coverage area of the roadside device a) obtained by the roadside device a to the vehicle. In this case, the roadside device a may not establish the communication connection to the vehicle a. Because the track forwarding message carries track information, and track information obtained by the roadside device a each time is usually different, data content carried in track forwarding messages of different periods may be different. Optionally, a plurality of track forwarding messages sent in a plurality of periods may be non-repetitive.

For another example, the roadside device a may broadcast the track forwarding message for the vehicle a. The track forwarding message may include vehicle indication information indicating the vehicle a, and indicate a track in the track information b. The vehicle a may determine, based on the vehicle indication information carried in the track forwarding message, that the track forwarding message is related to the vehicle a. Another vehicle may receive the track forwarding message broadcast by the roadside device a, but the another vehicle may determine, based on the vehicle indication information carried in the track forwarding message, that the track forwarding message is not related to the another vehicle. The vehicle indication information may indicate the vehicle a by using an identifier, through scrambling, or the like.

For another example, the roadside device a may multicast the track forwarding message to a vehicle group. The track forwarding message may include vehicle group indication information of the vehicle group, and indicate a track in the track information b. The vehicle group may include the vehicle a. The vehicle a may determine, based on the vehicle group indication information carried in the track forwarding message, that the track forwarding message is related to the vehicle a. The vehicle group indication information may indicate the vehicle group by using an identifier, through scrambling, or the like.

For another example, the roadside device a may establish a communication connection to the vehicle a. The roadside device a may unicast the track forwarding message to the vehicle a, and the track forwarding message may indicate a track in the track information b.

For example, the track forwarding message may include one or more of the following content: the roadside device indication information a, the roadside device indication information b, and the vehicle indication information a. The roadside device indication information a indicates the roadside device a. The roadside device indication information b indicates the roadside device b. The vehicle indication information a indicates the vehicle. The roadside device indication information a may indicate a forwarder of the track information a, the roadside device indication information b may indicate a source of the track information a, and the vehicle indication information a may indicate a receiving device of the track information a.

As described above, the roadside device a may send all track information obtained from the roadside device b to the vehicle a. In some possible scenarios, the roadside device a may discard a part of all track information obtained from the roadside device b, and deliver the other part to the vehicle a.

In a possible scenario, when the roadside device a sends the track information of the vehicle b to the vehicle a for a first time, the message may carry information items that are of the vehicle b and that are related to license plate information, a vehicle brand, a vehicle product label, a vehicle type, a vehicle model, a vehicle color, a vehicle size, a vehicle shape, and the like. Then, the roadside device a may not send, to the vehicle a, the information items that are of the vehicle b and that are related to the license plate information, the vehicle brand, the vehicle product label, the vehicle type, the vehicle model, the vehicle color, the vehicle size, the vehicle shape, and the like.

In another possible scenario, two adjacent roadside devices may sense track information of a same traffic participant. The roadside device a, the roadside device b, and the vehicle b are used as an example. The vehicle b is currently located in an intersection area of the coverage area of the roadside device a and the coverage area of the roadside device b. Both the roadside device a and the roadside device b may obtain the track information of the vehicle b, and the track information obtained by the roadside device b may be sent to the roadside device a. If the vehicle a may obtain two pieces of track information of a same vehicle from the roadside device a, the track information is redundant.

In an example, the roadside device a may send, to the vehicle a, the track information of the vehicle a, the track information of the vehicle b, and the track information of the pedestrian 1 that are obtained by the roadside device a, and the track information of the vehicle b and the track information of the vehicle c that are obtained by the roadside device b. The vehicle a may select one piece of the track information that is of the vehicle b and that is obtained by the roadside device a and the track information that is of the vehicle b and that is obtained by the roadside device b, and discard the other. This helps reduce track information redundancy.

In another example, the roadside device a may send the track information that is of the vehicle b and that is obtained by the roadside device a to the vehicle a, and discard the track information that is of the vehicle b and that is obtained by the roadside device b. Alternatively, the roadside device a may send the track information that is of the vehicle b and that is obtained by the roadside device b to the vehicle a, and discard the track information that is of the vehicle b and that is obtained by the roadside device a. This helps reduce track information redundancy.

Optionally, when the roadside device b is located downstream in a moving direction of the vehicle a relative to the roadside device a (for ease of description, the roadside device b is referred to as a downstream roadside device of the roadside device a), the roadside device a or the vehicle a may choose to discard the track information that is of the vehicle b and that is within the coverage area corresponding to the roadside device a. Because the vehicle enters the coverage area of the downstream roadside device, the track information within the coverage area corresponding to the downstream roadside device may be more accurate.

Optionally, when the roadside device a obtains the track information of the vehicle b before the roadside device b obtains the track information of the vehicle b, the roadside device a or the vehicle a may choose to discard the track information that is of the vehicle b and that is obtained by the roadside device a. Real-time performance of the track information obtained later may be better.

As described above, the roadside device a or the vehicle a may determine whether two pieces of track information (for example, track information 1 and track information 2) indicate a same traffic participant. If the two pieces of track information indicate the same traffic participant, the roadside device a or the vehicle a may discard one of the two pieces of track information. For example, the roadside device a may send one of the two pieces of track information to the vehicle a, and does not send the other of the two pieces of track information. For another example, the vehicle a may output a traveling scheme based on one of the two pieces of track information and not based on the other of the two pieces of track information.

The following describes some possible implementations of determining that two pieces of track information indicate or belong to a same traffic participant.

In an example, that the track information 1 and the track information 2 indicate or belong to a same vehicle may meet: The track information 1 includes an information item 1, the track information 2 includes an information item 2, the information item 1 matches the information item 2, and the information item 1 and the information item 2 may belong to a same information item type.

That the information item 1 matches the information item 2 may mean, for example, that the information item 1 and the information item 2 are the same, or that the information item 1 corresponds to the information item 2, or that a matching degree between the information item 1 and the information item 2 may be higher than a preset matching threshold. That the information item 1 corresponds to the information item 2 may mean, for example, that the information item 1 and the information item 2 may be slightly different and not much different.

For example, if a vehicle location included in the track information 1 is the same as a vehicle location included in the track information 2, or a distance between the vehicle location included in the track information 1 and the vehicle location included in the track information 2 is less than a preset distance, it may be determined that the track information 1 and the track information 2 are track information of a same vehicle.

For another example, the roadside device a or the vehicle a may input the information item 1 and the information item 2 into a track information processing model (where the track information processing model may be, for example, a neural network model). The track information processing model may separately perform data processing such as feature extraction, convolution, and pooling on the information item 1 and the information item 2, to obtain the matching degree between the information item 1 and the information item 2. If the matching degree between the information item 1 and the information item 2 is higher than the preset matching threshold, it may be determined that the information item 1 matches the information item 2.

Optionally, that the track information 1 and the track information 2 belong to a same vehicle may further meet: A priority of the information item type to which the information item 1 and the information item 2 belong is higher than a preset priority.

For example, if license plate information included in the track information 1 matches license plate information included in the track information 2, and a priority of the license plate information is higher than that of another information item, it may be determined that the track information 1 and the track information 2 are track information of a same vehicle.

Optionally, that the track information 1 and the track information 2 belong to a same vehicle may meet: M information items 1 of the track information 1 match M information items 2 of the track information 2, and the M information items 1 are in a one-to-one correspondence with the M information items 2 (where corresponding information item 1 and information item 2 have a same item type), where M is greater than a preset item quantity.

For example, if a plurality of information items (for example, information items that do not change in the track information, such as license plate information, a vehicle brand, a vehicle product label, a vehicle type, a vehicle model, a vehicle color, a vehicle size, and a vehicle shape) in the track information 1 match a plurality of information items in the track information 2, it may be determined that the track information 1 and the track information 2 are track information of a same vehicle.

A plurality of pieces of travel information of a same vehicle in a period of time may form a travel track of the vehicle. With reference to the example shown in FIG. 1, a possible solution for determining a travel track according to an embodiment of this application is described.

At a moment 1, the vehicle b may appear at a location 1 within the coverage area of the roadside device a, and the roadside device a may obtain track information 1 of the vehicle b at the moment 1. At a moment 2, the vehicle b may appear at a location 2 within the coverage area of the roadside device a, and the roadside device a may obtain track information 2 of the vehicle b at the moment 2. At a moment 3, the vehicle b may appear at a location 3 within the coverage area of the roadside device b, and the roadside device b may obtain track information 3 of the vehicle b at the moment 3. For example, the roadside device a or the vehicle a may determine that the track information 1, the track information 2, and the track information 3 all belong to the vehicle b with reference to some possible implementations of determining that two pieces of track information indicate or belong to a same traffic participant, or with reference to traffic participant identifiers carried in the track information 1, the track information 2, and the track information 3, to obtain a travel track of the vehicle b in a cross-roadside-device scenario.

According to the foregoing example, a moving track of a same vehicle is generally not interrupted by crossing roadside devices. This helps the vehicle better determine a surrounding traffic road condition and plan a better traffic solution, and helps reduce a traffic safety problem caused by an unexpected factor. For example, the vehicle a may use a traveling scheme of the vehicle b, and this helps reduce a possibility that the vehicle a changes a vehicle platoon at will.

With reference to FIG. 1, both the roadside device a and the roadside device b may be located within the coverage area of the server 1. The roadside device a may further obtain track information from a roadside device located within a coverage area of another server.

The roadside device c is used as an example. The roadside device c may be located outside the line-of-sight range of the vehicle a and within the beyond-line-of-sight range of the vehicle a. The roadside device c may be located within the coverage area of the server 2, and the server 2 may be different from the server 1. The roadside device a may obtain track information c from the roadside device c, and the track information c may be located outside the coverage area of the roadside device a. For example, the roadside device a may obtain track information of the vehicle d and track information of the vehicle e from the roadside device c, and the vehicle d and the vehicle e may be located within a coverage area of the roadside device c.

In an example, the roadside device a may interact with the roadside device c through the server 1 and the server 2. The server 1 may subscribe to the track information obtained by the roadside device c from the server 2. The server 1 may forward the track information from the roadside device c to the roadside device a, so that the roadside device a may obtain the track information from the roadside device c from the server 1.

In another example, the server 1 may obtain an address and topology information of the roadside device c from the server 2. The server 2 may obtain the address and the topology information of the roadside device b from the server 1. The server 1 may forward the address and the topology information of the roadside device c to the roadside device b. The server 2 may forward the address and the topology information of the roadside device b to the roadside device c. Therefore, the roadside device a and the roadside device c may directly interact with each other. The roadside device c may send the track information obtained by the roadside device c to the roadside device a based on the address and the topology information of the roadside device a.

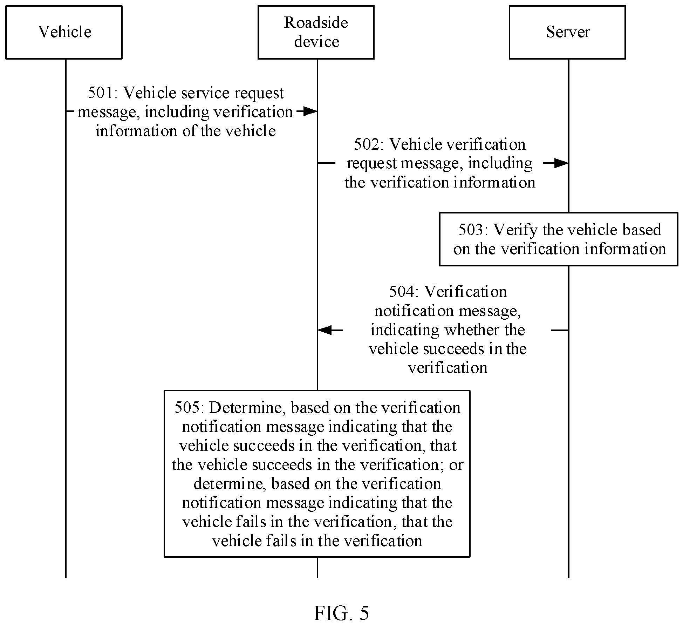

FIG. 5 is a schematic flowchart of an exchange method according to an embodiment of this application. For example, the exchange method shown in FIG. 5 may be applied to 401 and 402 in the method shown in FIG. 4. In the example shown in FIG. 5, a vehicle may, for example, be verified directly by a server.

501: The vehicle sends a vehicle service request message to a roadside device, where the vehicle service request message includes verification information of the vehicle.

Correspondingly, the roadside device receives the vehicle service request message from the vehicle.

502: The roadside device sends a vehicle verification request message to the server, where the vehicle verification request message includes the verification information.

Correspondingly, the server receives the vehicle verification request message from the roadside device.

503: The server verifies the vehicle based on the verification information.

504: The server sends a verification notification message to the roadside device, where the verification notification message indicates whether the vehicle succeeds in the verification.

Correspondingly, the roadside device receives the verification notification message from the server.

505: The roadside device determines, based on the verification notification message indicating that the vehicle succeeds in the verification, that the vehicle succeeds in the verification; or the roadside device determines, based on the verification notification message indicating that the vehicle fails in the verification, that the vehicle fails in the verification.

For example, the vehicle shown in FIG. 5 may correspond to any vehicle shown in FIG. 1. For example, the roadside device shown in FIG. 5 may correspond to any roadside device shown in FIG. 1. For example, the server shown in FIG. 5 may correspond to any server shown in FIG. 1.

The exchange method according to this embodiment of this application is described below by using the roadside device a, the vehicle a, and the server 1 shown in FIG. 1 as an example. The exchange method shown in FIG. 5 may be used to verify a vehicle.

After the vehicle a enters a communication range of the roadside device a, the vehicle a may send a vehicle service request message to the roadside device a. For example, the vehicle service request message may be used to request the roadside device a to provide an internet of vehicles communication service for the vehicle a. The vehicle service request message may include verification information of the vehicle a. The verification information of the vehicle a may include validity verification information of the vehicle a. The verification information of the vehicle may be information used to recognize and identify the vehicle, or may be information that can enable the vehicle to be legally served.

For example, the verification information of the vehicle a may include an authentication certificate of the vehicle a. The authentication certificate of the vehicle a may be used to verify validity of the vehicle, so that the roadside device a may legally provide track information for the vehicle a. The certification certificate of vehicle a may be unique. For another example, the verification information of the vehicle a may include a user name and a login password. The user name may be unique.

The roadside device a may forward the verification information of the vehicle a to the server 1 based on the vehicle verification request message, and wait for a response from the server 1. The server 1 may verify the vehicle a based on the verification information of the vehicle a. In an example, the server 1 may store a plurality of keys in a one-to-one correspondence with a plurality of authentication certificates, so that the server 1 may perform authentication on the authentication certificate reported by the vehicle a. In another example, the server may store a plurality of user names and login passwords that are in a one-to-one correspondence with the plurality of user names, so that the server 1 may perform authentication on the user name and the login password that are reported by the vehicle a.

If the vehicle a is successfully verified by the server 1, the server 1 may send a verification notification message a to the roadside device. The verification notification message a may indicate that the vehicle a succeeds in the verification. For example, the verification notification message a may indicate the roadside device a to provide an internet of vehicles communication service for the vehicle a. For example, the roadside device a may perform 403 to 405 shown in FIG. 4 based on the verification notification message a. In other words, if the verification information reported by the vehicle a is valid (for example, the certificate is within a validity period, or a priority of the certificate is higher than a preset priority), the roadside device a may provide the track information obtained by the roadside device a for the vehicle a. Optionally, the roadside device a may further send a vehicle service response message a to the vehicle, where the vehicle service response message a may indicate that the vehicle a succeeds in the verification. Optionally, the roadside device a may establish a communication connection to the vehicle a based on the verification notification message a.

If the vehicle a fails to be verified by the server 1, the server 1 may send a verification notification message b to the roadside device. The verification notification message b may indicate that the vehicle a fails in the verification. For example, the verification notification message b may indicate that the roadside device a refuses to provide an internet of vehicles communication service for the vehicle a. For example, the roadside device a may refuse to perform 403 to 405 shown in FIG. 4 based on the verification notification message b. In other words, if the verification information reported by the vehicle a is invalid, or an account balance corresponding to the verification information reported by the vehicle a is insufficient, the roadside device a may refuse to provide the track information obtained by the roadside device for the vehicle a. Optionally, the roadside device a may further send a vehicle service response message b to the vehicle, where the vehicle service response message b may indicate that the vehicle a fails in the verification. Optionally, the roadside device a may refuse, based on the verification notification message b, to establish a communication connection to the vehicle a.

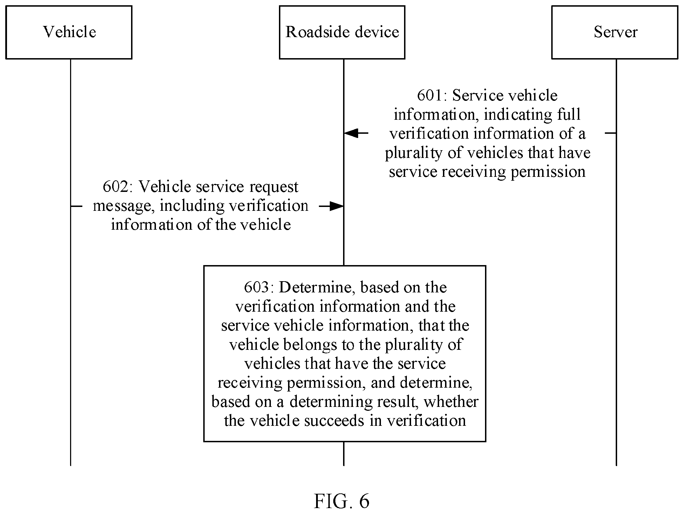

FIG. 6 is a schematic flowchart of another exchange method according to an embodiment of this application. For example, the exchange method shown in FIG. 6 may be applied to 401 and 402 in the method shown in FIG. 4. In the example shown in FIG. 6, a vehicle may, for example, be verified directly by a roadside device.

601: A server sends service vehicle information to the roadside device, where the service vehicle information indicates full verification information of a plurality of vehicles that have service receiving permission.

Correspondingly, the roadside device obtains the service vehicle information from the server.

602: The vehicle sends a vehicle service request message to the roadside device, where the vehicle service request message includes verification information of the vehicle.

Correspondingly, the roadside device receives the vehicle service request message from the vehicle.

603: The roadside device determines, based on the verification information and the service vehicle information, that the vehicle belongs to the plurality of vehicles that have the service receiving permission, and determines, based on a determining result, whether the vehicle succeeds in verification. The roadside device may determine, based on the determining result that the vehicle belongs to the plurality of vehicles, whether the vehicle succeeds in the verification.

For example, the vehicle shown in FIG. 6 may correspond to any vehicle shown in FIG. 1. For example, the roadside device shown in FIG. 6 may correspond to any roadside device shown in FIG. 1. For example, the server shown in FIG. 6 may correspond to any server shown in FIG. 1.

A vehicle verification method according to this embodiment of this application is described below by using the roadside device a, the vehicle a, and the server 1 shown in FIG. 1 as an example.

The roadside device a may obtain full verification information of a plurality of vehicles from the server 1. The full verification information of the vehicle may be the verification information used to directly and completely verify the vehicle. In an example, the full verification information may include all verification information of the vehicle. In another example, the full verification information may be complete data of verification information used to verify the vehicle. For example, the full verification information of the vehicle may include one or more of a key of a certificate, a user name, a login password, a qualification priority, and a qualification validity period. Therefore, the roadside device a can have a vehicle verification function.

After the vehicle a enters the communication range of the roadside device a, the vehicle a may send the vehicle service request message to the roadside device a. The vehicle service request message may be used to request the roadside device a to provide an internet of vehicles communication service for the vehicle a. The vehicle service request message may include verification information of the vehicle a. The verification information of the vehicle a may include validity verification information of the vehicle a. The roadside device a may verify, based on the full verification information of the plurality of vehicles delivered by the server 1, the verification information of the vehicle a reported by the vehicle a, to obtain a verification result of the vehicle a.

When the full verification information of the plurality of vehicles includes the verification information of the vehicle a, or the verification information of the vehicle a may match full verification information of one of the plurality of vehicles, the plurality of vehicles that have the service receiving permission and that are indicated by the service vehicle information may include the vehicle a. Therefore, the roadside device a may determine that the vehicle succeeds in the verification. The roadside device a may provide an internet of vehicles communication service for the vehicle a. For example, the roadside device a may perform 403 to 405 shown in FIG. 4. That is, if the verification information reported by the vehicle a is valid, (for example, the certificate is within a validity period, or a priority of the certificate is higher than a preset priority.), the roadside device a may provide the track information obtained by the roadside device a for the vehicle a. Optionally, the roadside device a may further a send a vehicle service response message a to the vehicle a, where the vehicle service response message a may indicate that the vehicle a succeeds in the verification. Optionally, when the vehicle a is successfully verified, the roadside device a may establish a communication connection to the vehicle a.

When the full verification information of the plurality of vehicles does not include the verification information of the vehicle a, or the verification information of the vehicle a cannot match full verification information of any one of the plurality of vehicles, the plurality of vehicles that have the service receiving permission and that are indicated by the service vehicle information do not include the vehicle a. Therefore, the roadside device a may determine that the vehicle fails in the verification. The roadside device a may refuse to provide an internet of vehicles communication service for the vehicle a. For example, the roadside device a may refuse to perform 403 to 405 shown in FIG. 4. In other words, if the verification information reported by the vehicle a is invalid, or an account balance corresponding to the verification information reported by the vehicle a is insufficient, the roadside device a may refuse to provide the track information obtained by the roadside device a for the vehicle a. The roadside device a may further send a vehicle service response message b to the vehicle, where the vehicle service response message b may indicate that the vehicle a fails in the verification. Optionally, the roadside device a may refuse to establish a communication connection to the vehicle a based on the verification notification message b.

Compared with the vehicle verification method shown in FIG. 5, the method shown in FIG. 6 helps reduce a quantity of signaling interactions during vehicle verification, and further helps improve efficiency of vehicle verification.

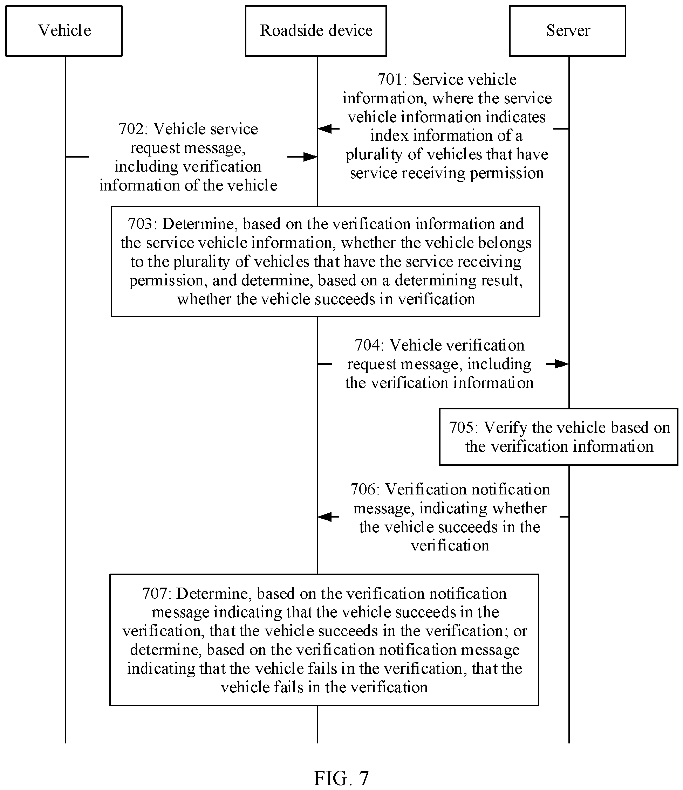

FIG. 7 is a schematic flowchart of still another exchange method according to an embodiment of this application. For example, the exchange method shown in FIG. 7 may be applied to 401 and 402 in the method shown in FIG. 4. In the example shown in FIG. 7, for example, a vehicle may be pre-verified by a roadside device, and then fully verified by a server.

701: The server sends service vehicle information to a roadside device, where the service vehicle information is index information of a plurality of vehicles that have service receiving permission. The index information may indicate the plurality of vehicles that have the service receiving permission.

Correspondingly, the roadside device obtains the service vehicle information from the server.

702: The vehicle sends a vehicle service request message to the roadside device, where the vehicle service request message includes verification information of the vehicle.

Correspondingly, the roadside device receives the vehicle service request message from the vehicle.

703: The roadside device determines, based on the verification information and the service vehicle information, whether the vehicle belongs to the plurality of vehicles that have the service receiving permission, and determines, based on a determining result, whether the vehicle succeeds in verification. The roadside device may determine, based on the determining result that the vehicle belongs to the plurality of vehicles, whether the vehicle succeeds in the verification.

For example, 703 may be used to perform pre-verification on the vehicle.

704: The roadside device sends a vehicle verification request message to the server, where the vehicle verification request message includes the verification information.

Correspondingly, the server receives the vehicle verification request message from the roadside device.

705: The server verifies the vehicle based on the verification information.

706: The server sends a verification notification message to the roadside device, where the verification notification message indicates whether the vehicle succeeds in the verification.

Correspondingly, the roadside device receives the verification notification message from the server.

707: The roadside device determines, based on the verification notification message indicating that the vehicle succeeds in the verification, that the vehicle succeeds in the verification; or the roadside device determines, based on the verification notification message indicating that the vehicle fails in the verification, that the vehicle fails in the verification.

For example, the vehicle shown in FIG. 7 may correspond to any vehicle shown in FIG. 1. For example, the roadside device shown in FIG. 7 may correspond to any roadside device shown in FIG. 1. For example, the server shown in FIG. 7 may correspond to any server shown in FIG. 1.

A vehicle verification method according to this embodiment of this application is described below by using the roadside device a, the vehicle a, and the server 1 shown in FIG. 1 as an example.

The roadside device a may obtain, from the server 1, the index information of the plurality of vehicles that have the service receiving permission. The index information may be an index of the full verification information. The index information of the plurality of vehicles that have the service receiving permission may correspond to the full verification information that is of the plurality of vehicles and that is stored in the server 1. The index information may be index information used to pre-verify the vehicle. The index information may indicate a part of the full verification information. The index information is, for example, an authentication certificate identifier or a user name. Therefore, the roadside device a can have a vehicle verification function.

After the vehicle a enters the communication range of the roadside device a, the vehicle a may send the vehicle service request message to the roadside device a. The roadside device a may verify, based on the index information that is delivered by the server 1 and that is of the plurality of vehicles that have the service receiving permission, the verification information that is of the vehicle a and that is reported by the vehicle a.

When the verification information of the vehicle a may match index information of one of the plurality of vehicles that have the service receiving permission, the plurality of vehicles that have the service receiving permission indicated by the service vehicle information may include the vehicle a. Therefore, the roadside device a may determine that the vehicle succeeds in the verification. For example, the index information of the plurality of vehicles that have the service receiving permission may include a plurality of authentication certificate identifiers, where the plurality of authentication certificate identifiers may be in a one-to-one correspondence with authentication certificates of the plurality of vehicles. If the plurality of authentication certificate identifiers include the identifier of the authentication certificate of the vehicle a, the vehicle a may succeed in the verification. For another example, the service vehicle index information of the plurality of vehicles that have the service receiving permission may include a plurality of user names. If the plurality of user names include a user name reported by the vehicle a, the vehicle a may succeed in the verification.

When the vehicle a is successfully verified, the roadside device a may provide an internet of vehicles communication service for the vehicle a. For example, the roadside device a may perform 403 to 405 shown in FIG. 4. The roadside device a may further a send a vehicle service response message a to the vehicle a, where the vehicle service response message a may indicate that the vehicle a succeeds in the verification. Optionally, the roadside device a may establish a communication connection to the vehicle a.

When the verification information of the vehicle a cannot match index information of one of the plurality of vehicles that have the service receiving permission, the plurality of vehicles that have the service receiving permission indicated by the service vehicle information may not include the vehicle a. Therefore, the roadside device a may determine that the vehicle fails in the verification. For example, the index information of the plurality of vehicles that have the service receiving permission may include a plurality of authentication certificate identifiers, where the plurality of authentication certificate identifiers may be in a one-to-one correspondence with authentication certificates of the plurality of vehicles. If the plurality of authentication certificate identifiers does not include the identifier of the authentication certificate of the vehicle a, the vehicle a may fail in the verification. For another example, the index information of the plurality of vehicles that have the service receiving permission may include a plurality of user names. If the plurality of user names do not include a user name reported by the vehicle a, the vehicle a may fail in the verification.

When the vehicle a fails to be verified, the roadside device a may refuse to provide an internet of vehicles communication service for the vehicle a. For example, the roadside device a may not perform 403 to 405 shown in FIG. 4. The roadside device a may further send a vehicle service response message b to the vehicle a, where the vehicle service response message b may indicate that the vehicle a fails in the verification. Optionally, the roadside device a may refuse to establish a communication connection to the vehicle a.

For specific implementations of 702, 704 to 706, for example, refer to 501 to 504 shown in FIG. 5.

In an example, after 703, the vehicle a may be pre-verified successfully.

If the roadside device a receives the verification notification message a from the server 1, it means that complete verification by the server 1 on the verification information of the vehicle a succeeds. The roadside device a may continue to provide an internet of vehicles communication service for the vehicle a. Optionally, the roadside device a may continue to interact with the vehicle a by using a previously established communication connection to the vehicle a.

If the roadside device a receives the verification notification message b from the server 1, it means that complete verification by the server 1 on the verification information of the vehicle a fails. The roadside device a may stop providing an internet of vehicles communication service for the vehicle a. For example, the roadside device a may not send a track forwarding message in a current sending period or a next sending period. Optionally, the roadside device a may cut off a communication connection previously established with the vehicle a.

In an example, after 703, the vehicle a may fail to be pre-verified.

If the roadside device a receives the verification notification message a from the server 1, the roadside device a may provide an internet of vehicles communication service for the vehicle a. For example, the roadside device a may start to send a track forwarding message in a current sending period or a next sending period. Optionally, the roadside device a may establish a communication connection to the vehicle a based on the verification notification message a.

If the roadside device a receives the verification notification message b from the server 1, the roadside device a may keep refusing to provide an internet of vehicles communication service for the vehicle a. Optionally, the roadside device a may keep refusing to establish a communication connection to the vehicle a.

With reference to the examples shown in FIG. 1 and FIG. 4 to FIG. 7, when the vehicle a enters the communication range of the roadside device a, the vehicle a may complete vehicle verification in any implementation shown in FIG. 5 to FIG. 7. When the vehicle a travels from the communication range of the roadside device a to a communication range of the roadside device b, the vehicle a may complete vehicle verification again in any implementation shown in FIG. 5 to FIG. 7. However, a vehicle verification process may be time-consuming, and interaction efficiency between the vehicle a and the internet of vehicles communication device may be affected.

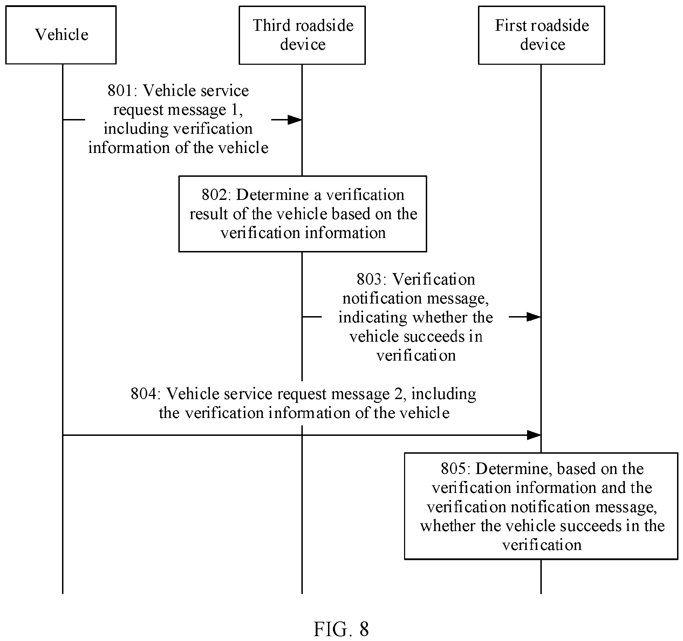

FIG. 8 is a schematic flowchart of yet another exchange method according to an embodiment of this application. For example, the exchange method shown in FIG. 8 may be applied to 401 and 402 in the method shown in FIG. 4. In the example shown in FIG. 8, a process of a vehicle being verified by a server may, for example, be omitted.

801: The vehicle sends a vehicle service request message 1 to a third roadside device, where the vehicle service request message 1 includes verification information of the vehicle.

Correspondingly, the third roadside device receives the vehicle service request message 1 from the vehicle.

802: The third roadside device determines a verification result of the vehicle based on the verification information.

803: The third roadside device sends a verification notification message to a first roadside device, where the verification notification message indicates whether the vehicle succeeds in verification.

Correspondingly, the first roadside device receives the verification notification message from the third roadside device.

804: The vehicle sends a vehicle service request message 2 to the first roadside device, where the vehicle service request message 2 includes the verification information of the vehicle.

Correspondingly, the first roadside device receives the vehicle service request message 2 from the vehicle.

For example, 803 may be executed before or after 804, or may be executed synchronously with 804.

805: The first roadside device determines, based on the verification information and the verification notification message, whether the vehicle succeeds in the verification.

For example, the vehicle shown in FIG. 8 may correspond to any vehicle shown in FIG. 1. For example, the first roadside device and the second roadside device shown in FIG. 8 may correspond to any two roadside devices shown in FIG. 1.

A vehicle verification method according to this embodiment of this application is described below by using the roadside device a, the roadside device b, and the vehicle a shown in FIG. 1 as an example.

For specific implementations of 801 and 802, for example, refer to examples shown in FIG. 5 to FIG. 7.

After the vehicle a enters the communication range of the roadside device a, the vehicle a may send the vehicle service request message 1 to the roadside device a. The roadside device a may determine the verification result (where the verification result of the vehicle a may include that the vehicle a succeeds in the verification) of the vehicle a by using, for example, any one of the embodiments shown in FIG. 5 to FIG. 7. The roadside device a may send the verification result of the vehicle a to the roadside device b based on a verification notification message c. The roadside device a may, for example, be located upstream in a moving direction of the vehicle a relative to the roadside device b (where the roadside device a may be referred to as an upstream roadside device of the roadside device b).

After the vehicle a enters the communication range of the roadside device b, the vehicle a may send the vehicle service request message 2 to the roadside device b. The roadside device b may determine, based on the vehicle service request message 2 and the verification notification message c from the roadside device a, whether the vehicle a succeeds in the verification.

In an example, the verification notification message c from the roadside device a may directly indicate the verification result of the vehicle a. The roadside device a may determine the verification result of the vehicle a based on the verification notification message c.

In another example, the verification notification message c from the roadside device a may include the verification information indicating the vehicle a, and indirectly indicating the verification result of the vehicle a. For example, the verification notification message c from the roadside device a may include a key for verifying the authentication certificate of the vehicle a. The roadside device a may verify the authentication certificate in the vehicle service request message based on the key. For another example, the verification notification message c from the roadside device a may include a user name and a password used to verify the vehicle a. The roadside device a may verify the user name and the password in the vehicle service request message based on the user name and the password.

With reference to FIG. 1, both the roadside device a and the roadside device b may be located within the coverage area of the server 1. In another scenario, when the vehicle travels from the communication range of the roadside device b to a communication range of the roadside device c, the roadside device b may send, to the roadside device c, a verification notification message d indicating the vehicle a. The roadside device c may be located within the coverage area of the server 2, and the server 2 may be different from the server 1.

In an example, the roadside device b may interact with the roadside device c through the server 1 and the server 2. The server 1 may forward the verification notification message d from the roadside device b to the server 2, so that the roadside device c may obtain the verification notification message d from the roadside device b from the server 2.

In another example, the server 1 may obtain the address and the topology information of the roadside device c from the server 2. The server 2 may obtain the address and the topology information of the roadside device b from the server 1. The server 1 may forward the address and the topology information of the roadside device c to the roadside device b. The server 2 may forward the address and the topology information of the roadside device b to the roadside device c. Therefore, the roadside device b and the roadside device c may directly interact with each other. The roadside device b may send the verification notification message d to the roadside device c based on the address and the topology information of the roadside device c.

According to the method shown in FIG. 8, the first roadside device may obtain, from the third roadside device, information for vehicle verification, and this helps reduce time, signaling interaction, and the like for vehicle verification, and further helps improve signaling interaction efficiency.

It can be learned from an implementation shown in FIG. 4 that, even if the vehicle does not complete verification, the roadside device may deliver the track information obtained by the roadside device in a case in which the roadside device does not know whether there is a vehicle, for example, in a periodic sending manner. However, this way of delivering track information is mechanical. According to the methods shown in FIG. 5 to FIG. 8, the roadside device may obtain communication data of the vehicle, to help flexibly provide an internet of vehicles communication service for the vehicle.

For example, the vehicle service request message may include track information of the vehicle a. The track information of the vehicle a may include, for example, one or more of a vehicle type, a vehicle appearance, a vehicle model, license plate information, a location, a moving speed, or a moving direction of the vehicle a. For example, the vehicle a may report the track information of the vehicle a to the roadside device a. The roadside device a may obtain the track information of the vehicle a through a sensing device. The roadside device a may match the track information reported by the vehicle a with the track information that is of the vehicle a and that is obtained through the sensing device, to establish an association relationship between the communication information of the vehicle a and the track information of the vehicle a.

When the vehicle a appears within the coverage area of the roadside device a, a sensing device corresponding to or connected to the roadside device a may capture the track information of the vehicle a. In addition, the roadside device a may continue to exchange track information with the vehicle a. If the roadside device a may send the track information of the vehicle a to the vehicle a, the vehicle a may incorrectly analyze the track information sent by the roadside device. In an example, the vehicle a determines, by analyzing the track information, that a vehicle b exists near the vehicle a. A planned traveling scheme of the vehicle a may cause the vehicle a to always avoid the vehicle b. However, the vehicle b is the vehicle a. In another example, the vehicle a may ignore track information that matches the track information of the vehicle a. However, this may cause the vehicle a to ignore track information other than the track information of the vehicle a, and a traffic accident is easily caused. If the roadside device a may skip the track information of the vehicle a when sending the track information to the vehicle a, not only signaling overheads are reduced, difficulty of processing the track information by the vehicle is also reduced.

Because the location of the vehicle in the communication range of the roadside device usually changes dynamically, the roadside device may flexibly adjust, based on the track information sent by the vehicle, an amount of track information corresponding to a beyond-line-of-sight sensing range, so that the amount of information sent by the roadside device can be adapted to a processing capability of the vehicle.

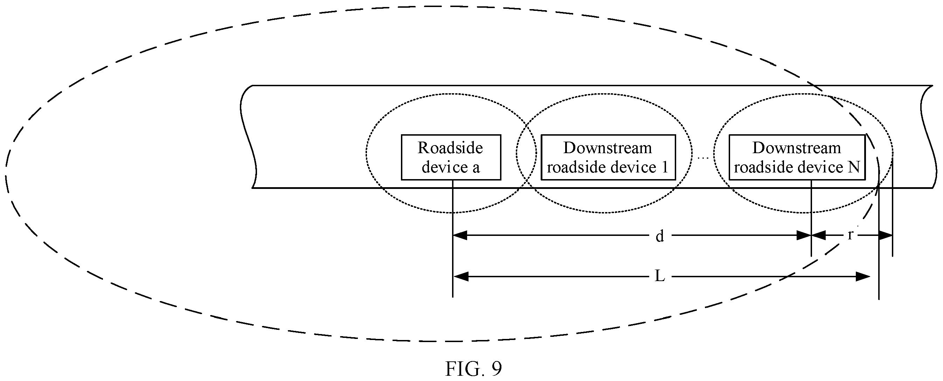

With reference to FIG. 1 to FIG. 4, and based on examples shown in FIG. 9 to FIG. 14, the following describes a method for determining a roadside device corresponding to a beyond-line-of-sight sensing range according to an embodiment of this application.

The roadside device a shown in FIG. 1 is used as an example. The roadside device a may determine at least one peripheral roadside device of the roadside device a based on the beyond-line-of-sight sensing range, where the beyond-line-of-sight sensing range is greater than the coverage area of the roadside device a. At least a part of the coverage area of the roadside device a is within the beyond-line-of-sight sensing range. For example, the at least one peripheral roadside device located within the beyond-line-of-sight sensing range may include the roadside device b. A center of the beyond-line-of sight sensing range corresponds to, for example, a location of the roadside device a or a location of the vehicle a. The location of the vehicle a may be sensed by a sensing device of the roadside device a, or a current location of the vehicle a may be reported by the vehicle a to the roadside device a.

The roadside device a may determine the beyond-line-of-sight sensing range.

In an example, the beyond-line-of-sight sensing range may be a preset beyond-line-of-sight sensing range.

For example, different types of roads may be adapted to different types of beyond-line-of-sight sensing ranges. On a highway, a beyond-line-of-sight sensing range for a vehicle may be large. On a low-speed highway near a campus, a crosswalk, or the like, a beyond-line-of-sight sensing range for a vehicle may be small. A specific value of the preset beyond-line-of-sight sensing range may be determined by a type of a road in which the roadside device a is located.

For another example, when the road is congested, even if the vehicle can obtain track information of a long distance, the vehicle cannot travel the long distance in a short time. Therefore, the preset beyond-line-of-sight sensing range may correspond to a congested beyond-line-of-sight sensing range. The congested beyond-line-of-sight sensing range can be narrow. When the road is smooth, the preset beyond-line-of-sight sensing range may correspond to a smooth beyond-line-of-sight sensing range. Compared with the congested beyond-line-of-sight sensing range, the smooth beyond-line-of-sight sensing range may be wide.

In another example, the beyond-line-of-sight sensing range may be a beyond-line-of-sight sensing range requested by the vehicle a. For example, the vehicle a may indicate, to the roadside device a by using the beyond-line-of-sight sensing range indication information, the beyond-line-of-sight sensing range requested by the vehicle a. The roadside device a may determine, for a request of the vehicle a, one or more roadside devices corresponding to the beyond-line-of-sight sensing range. Different vehicles can have different beyond-line-of-sight sensing ranges.

For example, when a data processing capability of the vehicle a is high, the vehicle a may process much track information. The vehicle a may request a wide beyond-line-of-sight sensing range from the roadside device a, to plan a comprehensive traveling scheme.

For another example, when the vehicle a is currently in a congested state, a beyond-line-of-sight sensing range that may be for the vehicle a may be small. The vehicle a may request a narrow beyond-line-of-sight sensing range from the roadside device a, to reduce a data processing amount of the vehicle a.

In still another example, the beyond-line-of-sight sensing range may be determined by using a beyond-line-of- sight sensing range requested by the vehicle a and a preset beyond-line-of-sight sensing range.

For example, when a processing capability of the vehicle a is weak, the beyond-line-of-sight sensing range requested by the vehicle a may be less than the preset beyond-line-of-sight sensing range. The roadside device a may narrow down the preset beyond-line-of-sight sensing range based on a request of the vehicle a, to obtain the beyond-line-of-sight sensing range corresponding to the vehicle a. This helps reduce an information amount of track information sent by the roadside device a, and helps reduce unnecessary signaling loss. Similarly, when the processing capability of the vehicle a is strong, the beyond-line-of-sight sensing range requested by the vehicle a may be greater than the preset beyond-line-of-sight sensing range. The roadside device a may widen the preset beyond-line-of-sight sensing range based on a request of the vehicle a, to obtain the beyond-line-of-sight sensing range corresponding to the vehicle a. This helps optimize the traveling scheme of the vehicle a.

The at least one peripheral roadside device determined by the roadside device a may include an upstream roadside device and/or a downstream roadside device. When a vehicle is located within a coverage area of a roadside device, along a traveling direction of the vehicle, a roadside device located in front of or downstream of the vehicle may be a downstream roadside device of the roadside device, and a roadside device located behind or upstream of the vehicle may be an upstream roadside device of the roadside device. As shown in FIG. 1, the roadside device a and the roadside device b are configured to obtain track information on a same side of a road. The vehicle a travels on the road and travels close to one side of the road. The vehicle a may successively pass through the coverage area of the roadside device a and the coverage area of the roadside device b. In this case, the roadside device b is a downstream roadside device of the roadside device a, and the roadside device a may be an upstream roadside device of the roadside device b. With reference to the example shown in FIG. 4, the at least one peripheral roadside device determined by the roadside device a may include the roadside device b.

In a first possible solution, the at least one peripheral roadside device may include a farthest downstream roadside device, a sum of a distance between the farthest downstream roadside device and the roadside device a and a sensing radius of the farthest downstream roadside device is greater than a radius of the beyond-line-of-sight sensing range. The farthest downstream roadside device may refer to a roadside device that is farthest (or first far) away from the roadside device a in the at least one peripheral roadside device. The sensing radius of the farthest downstream roadside device may be a radius of a coverage area of the farthest downstream roadside device.

As shown in FIG. 9, the at least one peripheral roadside device of the roadside device a includes a downstream roadside device 1, a downstream roadside device 2, ..., a downstream roadside device N-1, and a downstream roadside device N. A distance between a downstream roadside device i and the roadside device a is greater than a distance between a downstream roadside device i-1 and the roadside device a, and is less than a distance between a downstream roadside device i+1 and the roadside device a, where 1<i<N. The downstream roadside device N may be the farthest downstream roadside device in the at least one peripheral roadside device. It is assumed that a distance between the downstream roadside device N and the roadside device a is d, and a sensing radius of the downstream roadside device is r, a radius L of a beyond-line-of-sight sensing range may meet: L<r+d.

In the example shown in FIG. 9, the distance d between the farthest downstream roadside device and the roadside device a may be less than the radius L of the beyond-line-of-sight sensing range. In another example, the distance d between the farthest downstream roadside device and the roadside device a may be greater than or equal to the radius L of the beyond-line-of-sight sensing range.

In a second possible solution, the at least one peripheral roadside device includes a farthest downstream roadside device and a second farthest downstream roadside device. A distance between the farthest downstream roadside device and the roadside device a is greater than a radius of a beyond-line-of-sight sensing range. A distance between the second farthest downstream roadside device and the roadside device a is less than the radius of the beyond-line-of-sight sensing range. The second farthest downstream roadside device may refer to a roadside device that is second far away from the roadside device a in the at least one peripheral roadside device.

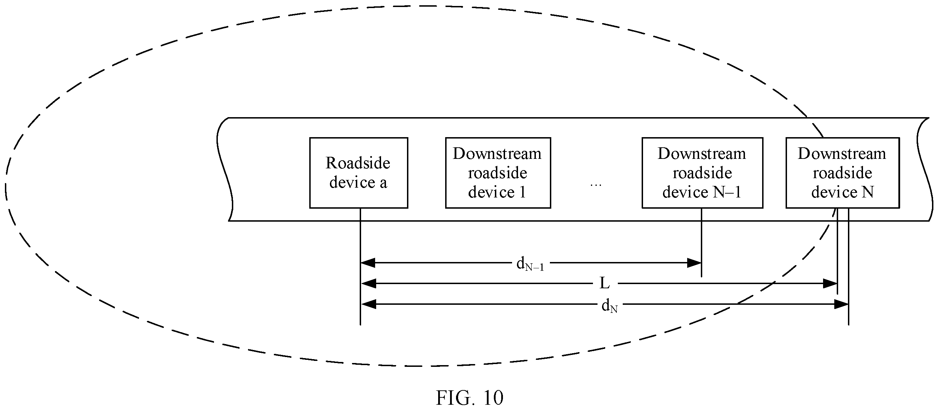

As shown in FIG. 10, the at least one peripheral roadside device of the roadside device a includes a downstream roadside device 1, a downstream roadside device 2, ..., a downstream roadside device N-1, and a downstream roadside device N. A distance between a downstream roadside device i and the roadside device a is greater than a distance between a downstream roadside device i-1 and the roadside device a, and is less than a distance between a downstream roadside device i+1 and the roadside device a, where 1<i<N. The downstream roadside device N may be the farthest downstream roadside device in the at least one peripheral roadside device. The downstream roadside device N-1 may be the second farthest downstream roadside device in the at least one peripheral roadside device. It is assumed that a distance between the downstream roadside device N and the roadside device a is d_{N}, and a distance between the downstream roadside device N-1 and the roadside device a is d_{N-1}, a radius L of a beyond-line-of-sight sensing range may meet: d_{N-1}<L<d_{N}.

In an example, a sensing radius of the second farthest downstream roadside device is r, and the radius L of the beyond-line-of-sight sensing range may meet: L>d_{N-1}+r.

In a third possible solution, a distance between two adjacent roadside devices may be approximately the same. The at least one peripheral roadside device may include floor(L/x) downstream roadside devices, where L may be a radius of a beyond-line-of-sight sensing range, x may be an average distance between two adjacent downstream roadside devices, and the function floor() may be a round-down function.

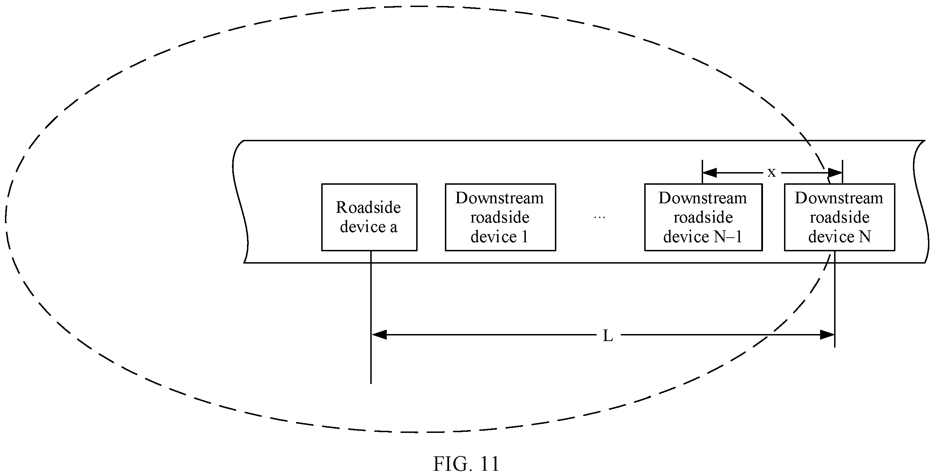

As shown in FIG. 11, the at least one peripheral roadside device of the roadside device a includes a downstream roadside device 1, a downstream roadside device 2, ..., a downstream roadside device N-1, and a downstream roadside device N. A distance between a downstream roadside device i and the roadside device a is greater than a distance between a downstream roadside device i-1 and the roadside device a, and is less than a distance between a downstream roadside device i+1 and the roadside device a, where 1<i<N.

In an example, a quantity of the at least one peripheral roadside device N=floor(L/x). A distance between the downstream roadside device N and the roadside device a is N*x, the radius L of the beyond-line-of-sight sensing range may meet: L<N*x+r, and r may be a sensing radius of the downstream roadside device N. Optionally, it is assumed that a sensing radius of the downstream roadside device N-1 is the same as the sensing radius of the downstream roadside device N, L may alternatively meet L>(N-1)*x+r.

In another example, a quantity of the at least one peripheral roadside device N=ceil(L/x). The function ceil() may be a round-up function. In other words, a distance between the downstream roadside device N and the roadside device a is N*x, and the radius L of the beyond-line-of-sight sensing range may meet: L<N*x. Optionally, L may further meet: L>(N-1)*x+r, where r may be the sensing radius of the downstream roadside device N-1.

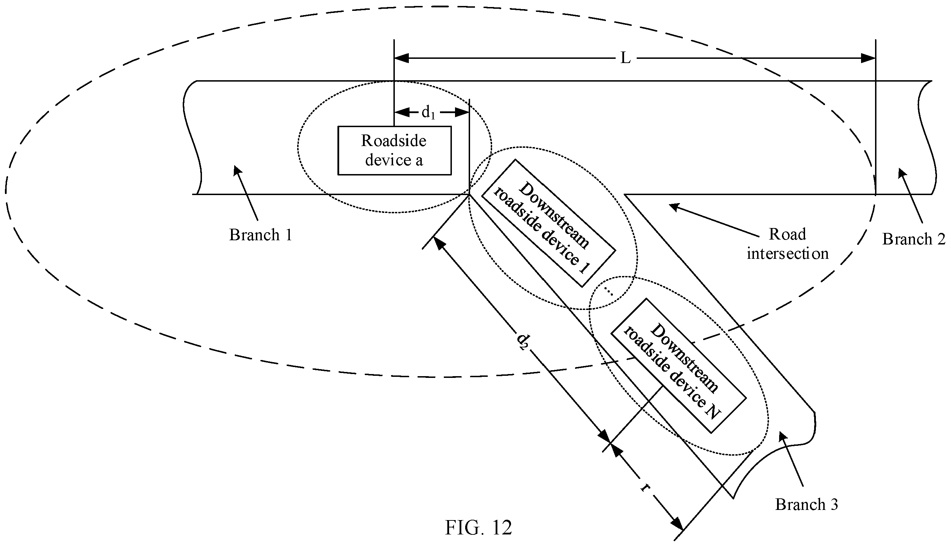

For example, solutions shown in FIG. 9 to FIG. 11 may be applied to a scenario of a straight road. For example, solutions shown in FIG. 12 to FIG. 14 may be applied to a scenario with a road intersection.

As shown in FIG. 12 to FIG. 14, a road section 1, a road section 2, and a road section 3 may exist in a beyond-line-of-sight sensing range, and the road section 1, the road section 2, and the road section 3 may interact with each other at a road intersection. It is assumed that the roadside device a is located in the road section 1. The roadside device a has a plurality of downstream roadside devices on the road section 3, including a downstream roadside device 1, a downstream roadside device 2, ..., a downstream roadside device N-1, and a downstream roadside device N. A distance between a downstream roadside device i and the roadside device a is greater than a distance between a downstream roadside device i-1 and the roadside device a, and is less than a distance between a downstream roadside device i+1 and the roadside device a, where 1<i<N.

In a fourth possible solution, the at least one peripheral roadside device includes a farthest downstream roadside device. A sum of a distance between the farthest downstream roadside device and the road intersection, a distance between the road intersection and the roadside device a, and a sensing radius of the farthest downstream roadside device is greater than a radius of the beyond-line-of-sight sensing range.

As shown in FIG. 12, the downstream roadside device N may be the farthest downstream roadside device in the at least one peripheral roadside device. It is assumed that a distance between the roadside device a and the road intersection is d₁, a distance between the downstream roadside device N and the road intersection is d₂, and the sensing radius of the downstream roadside device N is r, the radius L of the beyond-line-of-sight sensing range may meet: L<r+d₁+d₂. Optionally, a sum (d₁+d₂) of the distance d₁ between the roadside device a and the road intersection and the distance d₂ between the downstream roadside device N and the road intersection may be less than, equal to, or greater than the radius L of the beyond-line-of-sight sensing range.

In a fifth possible solution, the at least one peripheral roadside device includes a farthest downstream roadside device and a second farthest downstream roadside device. A sum of a distance between the farthest downstream roadside device and the road intersection and a distance between the road intersection and the roadside device a is greater than a radius of the beyond-line-of-sight sensing range. A sum of a distance between the second farthest downstream roadside device and the road intersection and the distance between the road intersection and the roadside device a is less than the radius of the beyond-line-of-sight sensing range.

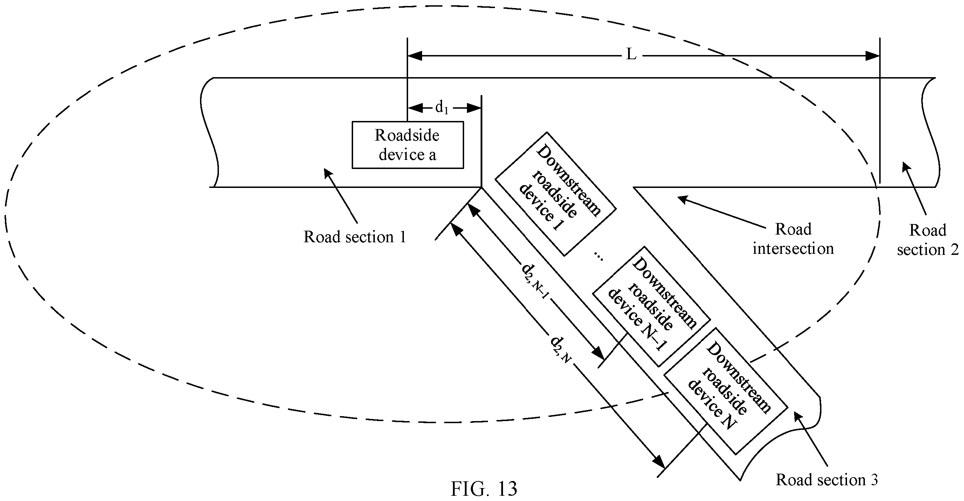

As shown in FIG. 13, the downstream roadside device N may be the farthest downstream roadside device in the at least one peripheral roadside device. The downstream roadside device N-1 may be the second farthest downstream roadside device in the at least one peripheral roadside device. It is assumed that a distance between the downstream roadside device N and the road intersection is d_{2, N}, a distance between the road intersection and the roadside device a is d₁, and a distance between the downstream roadside device N-1 and the roadside device a is d₂, N-1, a radius L of the beyond-line-of-sight sensing range may meet d₁+d₂, _{N-1}<L<d₁+d_{2, N}.

In an example, a sensing radius of the second farthest downstream roadside device is r, and the radius L of the beyond-line-of-sight sensing range may meet: L>d₁+d_{2, N-1}+r.

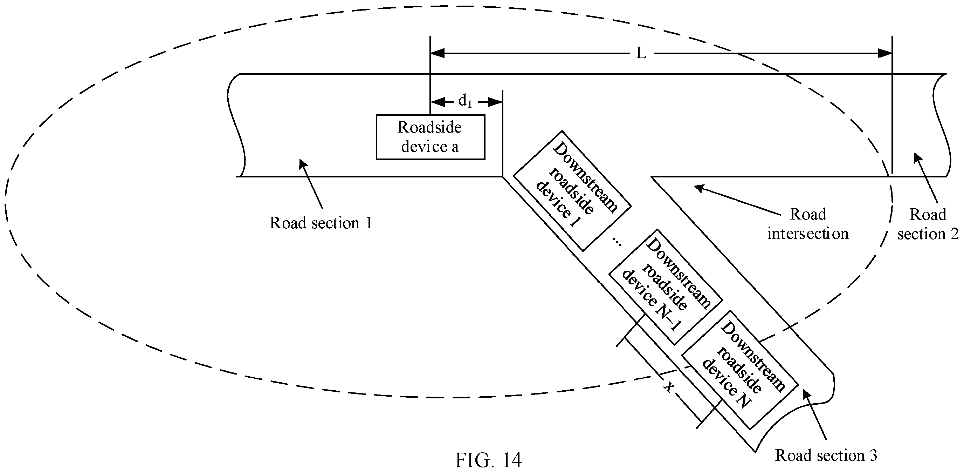

In a sixth possible solution, as shown in FIG. 14, a distance between two adjacent roadside devices may be approximately the same. There are n downstream roadside devices between the roadside device a and the road intersection. A distance between the roadside device a and the road intersection may be d₁. The at least one peripheral roadside device may include n+floor((L-d₁)/x) downstream roadside devices, where L may be a radius of a beyond-line-of-sight sensing range, x may be an average distance between two adjacent downstream roadside devices, and the function floor() may be a round-down function.

In an example, a quantity of the at least one peripheral roadside device N=n+floor((L-d₁)/x). A distance between the downstream roadside device N and the road intersection is N*x, the radius L of the beyond-line-of-sight sensing range may meet: L<N*x+di+r, and r may be a sensing radius of the downstream roadside device N. Optionally, it is assumed that a sensing radius of the downstream roadside device N-1 is the same as the sensing radius of the downstream roadside device N, L may alternatively meet L>(N-1)*x+d₁+r.

In another example, a quantity of the at least one peripheral roadside device N=n+ceil((L-d₁)/x). The function ceil() may be a round-up function. In other words, a distance between the downstream roadside device N and the road intersection is N*x, and the radius L of the beyond-line-of-sight sensing range may meet: L<N*x+d₁. Optionally, L may further meet: L>(N-1)*x+d₁, where r may be the sensing radius of the downstream roadside device N-1.

Optionally, the roadside device a may further determine at least one upstream roadside device based on the beyond-line-of-sight sensing range. For a specific implementation in which the roadside device a determines the at least one upstream roadside device, refer to examples shown in FIG. 9 to FIG. 14. Details are not described herein again.

With reference to the examples shown in FIG. 1 to FIG. 14, when the vehicle a travels to a communication handover area between the roadside device a and the roadside device b, both the roadside device a and the roadside device b may send track information to the vehicle a, and unnecessary signaling overheads may be caused. To reduce signaling overheads and to ensure exchange continuity of track information, the roadside device a may transfer a service of sending track information to the vehicle a to the roadside device b.

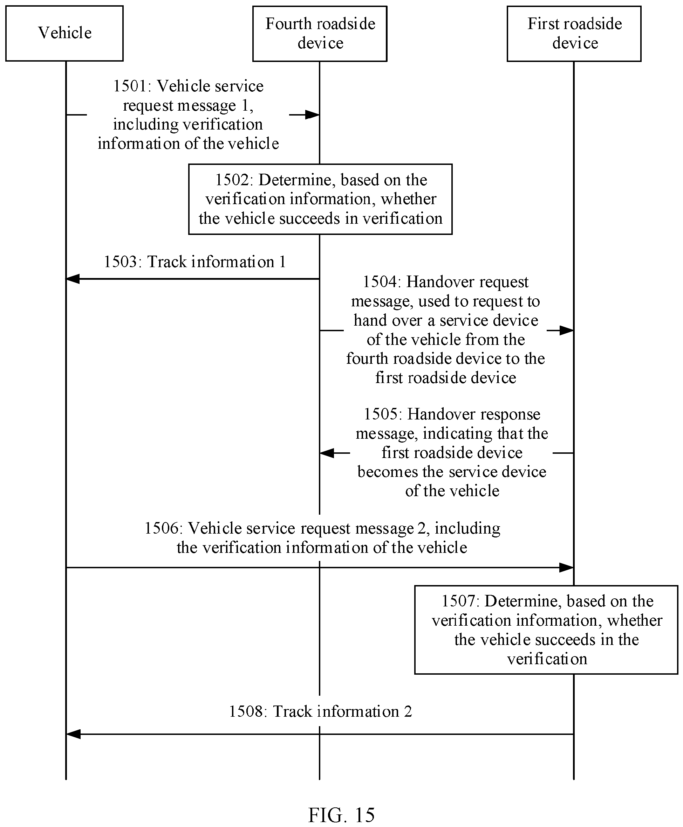

FIG. 15 is a schematic flowchart of another track information exchange method according to an embodiment of this application.

1501: A vehicle sends a vehicle service request message 1 to a fourth roadside device, where the vehicle service request message 1 includes verification information of the vehicle.

Correspondingly, the fourth roadside device receives the vehicle service request message 1 from the vehicle.

1502: The fourth roadside device determines, based on the verification information, whether the vehicle succeeds in verification.

When the fourth roadside device determines that the vehicle succeeds in the verification, the fourth roadside device may perform 1503. 1503 may be, for example, an optional step.

1503: The fourth roadside device sends track information 1 to the vehicle.

Correspondingly, the vehicle receives the track information 1 from the fourth roadside device.

For example, the track information 1 may indicate a track within a coverage area of the fourth roadside device, or indicate a track outside the coverage area of the fourth roadside device, or indicate a track within the coverage area of the fourth roadside device and a track outside the coverage area of the fourth roadside device.

1504: The fourth roadside device sends a handover request message to a first roadside device, where the handover request message is used to request to hand over a service device of the vehicle from the fourth roadside device to the first roadside device.

Correspondingly, the first roadside device may receive the handover request message from the fourth roadside device.

For example, 1504 may be executed when the vehicle is located in an intersection area of a communication range of the first roadside device and a communication range of the fourth roadside device, or may be executed when the vehicle is located in an intersection area of a coverage area of the first roadside device and the coverage area of the fourth roadside device. Generally, a coverage area of a roadside device may be less than a communication range of the roadside device. Limiting service handover to an intersection area of coverage areas helps improve signaling sending and receiving quality.

1505: The first roadside device sends a handover response message to the fourth roadside device in response to the handover request message, where the handover response message indicates that the first roadside device becomes the service device of the vehicle.

Correspondingly, the fourth roadside device may receive the handover response message from the first roadside device.

1506: The vehicle sends a vehicle service request message 2 to the first roadside device, where the vehicle service request message 2 includes the verification information of the vehicle.

Correspondingly, the first roadside device receives the vehicle service request message 2 from the vehicle.

An execution sequence of the handover request and response steps in steps 1504 and 1505 and the vehicle verification steps performed by the first roadside device in steps 1506 and 1507 is not required. In other words, the handover request and response steps may be performed before the first roadside device performs verification on the vehicle. Alternatively, the first roadside device may perform verification on the vehicle before the handover request and response steps are performed. Alternatively, the handover request and response steps and the vehicle verification steps may be performed simultaneously.

1507: The first roadside device determines, based on the verification information, that the vehicle succeeds in the verification.

1506 and 1507 may be, for example, optional steps. For specific implementations of 1506 and 1507, refer to 401 and 402 shown in FIG. 4. Details are not described herein again.

1508: The first roadside device sends track information 2 to the vehicle.

Correspondingly, the vehicle receives the track information 2 from the first roadside device.

For specific implementation of 1508, refer to 1503 shown in FIG. 15. Details are not described herein again.

For example, the track information 2 may indicate a track within the coverage area of the first roadside device, or indicate a track outside the coverage area of the first roadside device, or indicate a track within the coverage area of the first roadside device and a track outside the coverage area of the first roadside device.

For example, the vehicle shown in FIG. 15 may correspond to any vehicle shown in FIG. 1. For example, the first roadside device and the second roadside device shown in FIG. 15 may correspond to any two roadside devices shown in FIG. 1.

A vehicle verification method according to this embodiment of this application is described below by using the roadside device a, the roadside device b, and the vehicle a shown in FIG. 1 as an example.

For specific implementations of 1501 and 1502, for example, refer to examples shown in FIG. 5 to FIG. 7.

After the vehicle a enters the communication range of the roadside device a, the vehicle a may send the vehicle service request message to the roadside device a. For example, the roadside device a may determine, by using any one of the embodiments shown in FIG. 5 to FIG. 8, that the vehicle a succeeds in the verification. The roadside device a sends, to the vehicle a based on the verification result of the vehicle a, the track information a obtained by the roadside device a. In an example, the track information a obtained by the roadside device a may include, for example, the track information within the coverage area of the roadside device a. In another example, with reference to the embodiment shown in FIG. 4, the track information a obtained by the roadside device a may include the track information located outside the coverage area of the roadside device a.

After the vehicle a enters the intersection area between the communication range of the roadside device a and the communication range of the roadside device b, or after the vehicle a leaves the communication range of the roadside device a, or after the vehicle a enters the intersection area between the coverage area of the roadside device a and the coverage area of the roadside device b, or after the vehicle a leaves the coverage area of the roadside device a, the roadside device a may send the handover request message to the roadside device b. The location of the vehicle a may be sensed by the roadside device a. Alternatively, the location of the vehicle a may be sensed by the roadside device b, and the roadside device a may obtain the location of the vehicle a from the roadside device b. Alternatively, the vehicle a may report the location of the vehicle a to the roadside device a.

The handover request message may be used to request to hand over the service device of the vehicle a from the roadside device a to the roadside device b.

For example, the handover request message may include one or more of the following: roadside device indication information a, roadside device indication information b, and vehicle indication information a. The roadside device indication information a may be indication information indicating the roadside device a, and the roadside device indication information b may be indication information indicating the roadside device b. The vehicle indication information a may indicate the vehicle a. Optionally, the vehicle indication information a may include feature information of the vehicle a. For example, the feature information of the vehicle a may include one or more of the following: a vehicle type, a vehicle appearance, a vehicle model, and a vehicle license plate number.

The roadside device b may send the handover response message to the roadside device a based on the handover request message. For example, the service handover response message may include one or more of the following: roadside device indication information a, roadside device indication information b, vehicle indication information a, and a handover result. The handover result may indicate, for example, a handover success or a handover failure.

In an example, after receiving the handover request message, the roadside device b may directly send the handover response message to the roadside device a.

In another example, the roadside device b may send a query message to the vehicle a, where the query message may carry the vehicle indication information a. The vehicle a may respond to the query message based on the vehicle indication information a in the query message. Therefore, the roadside device b may confirm that the vehicle a can receive a message sent by the roadside device b.

In still another example, the handover request message may include the feature information of the vehicle a. The roadside device b may obtain feature information of at least one vehicle located within the coverage area of the roadside device b, match the feature information with the feature information of the vehicle a in the handover request message, and determine whether the vehicle a enters the coverage area of the roadside device b. If the feature information matches the feature information of the vehicle a, the roadside device b may determine that the vehicle a enters the coverage area of the roadside device b, and the roadside device b may send the handover response message to the roadside device a. The handover response message may indicate that the roadside device b becomes the service device of the vehicle a. Optionally, the handover response message may indicate that the handover succeeds.

After the roadside device a receives the handover response message indicating that the roadside device b becomes the service device of the vehicle a, the roadside device a may stop providing the internet of vehicles communication service for the vehicle a. For example, the roadside device a may stop sending the track information obtained by the roadside device a to the vehicle a. For another example, with reference to the example shown in FIG. 4, the roadside device a may stop performing 403 to 405 shown in FIG. 4.

When the handover response message indicates that the handover fails, the roadside device b may refuse to or not provide the internet of vehicles communication service for the vehicle a. For example, the roadside device b may refuse to or not send the track information obtained by the roadside device b to the vehicle a. For another example, with reference to the example shown in FIG. 4, the roadside device b may refuse to or not perform 403 to 405 shown in FIG. 4. Optionally, the roadside device a may continue to provide the internet of vehicles communication service for the vehicle a. The roadside device a may continue to be the service device of the vehicle a.

In a possible scenario, both the roadside device a and the roadside device b may be located within the coverage area of the server 1. In another possible scenario, when the vehicle travels from the communication range of the roadside device b to the communication range of the roadside device c, the roadside device b may send a handover request message to the roadside device c. Correspondingly, the roadside device c may send a handover response message to the roadside device b. The roadside device c may be located within the coverage area of the server 2, and the server 2 may be different from the server 1.

In an example, the roadside device b may interact with the roadside device c through the server 1 and the server 2. The server 1 may forward the handover request message from the roadside device b to the server 2, so that the roadside device c may obtain the handover request message from the roadside device b from the server 2. Similarly, the server 2 may forward the handover response message from the roadside device b to the server 1, so that the roadside device b may obtain the handover response message from the roadside device c from the server 1.

In another example, the server 1 may obtain the address and the topology information of the roadside device c from the server 2. The server 2 may obtain the address and the topology information of the roadside device b from the server 1. The server 1 may forward the address and the topology information of the roadside device c to the roadside device b. The server 2 may forward the address and the topology information of the roadside device b to the roadside device c. Therefore, the roadside device b and the roadside device c may directly interact with each other. The roadside device b may send the handover request message to the roadside device c based on the address and the topology information of the roadside device c. The roadside device c may send the handover response message to the roadside device b based on the address and the topology information of the roadside device b.

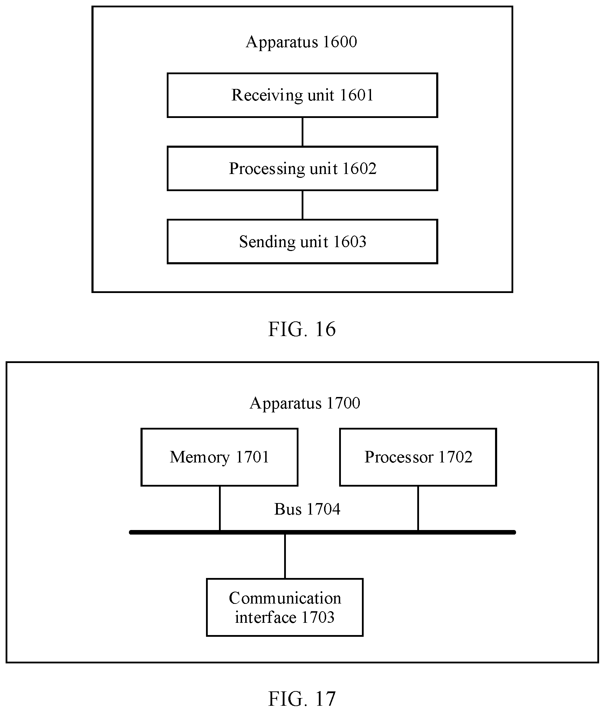

FIG. 16 is a schematic diagram of a structure of an apparatus 1600 according to an embodiment of this application. The apparatus 1600 includes one or more of a receiving unit 1601, a processing unit 1602, and a sending unit 1603. The apparatus 1600 may be configured to perform steps of the exchange method according to embodiments of this application.

For example, the apparatus 1600 may be a roadside device shown in FIG. 1 to FIG. 3.

For example, the receiving unit 1601 may be configured to perform 401 and 404 in the method shown in FIG. 4, the processing unit 1602 may be configured to perform 402 in the method shown in FIG. 4, and the sending unit 1603 may be configured to perform 403 and 405 in the method shown in FIG. 4.

For another example, the receiving unit 1601 may be configured to perform 501 and 504 in the method shown in FIG. 5, the processing unit 1602 may be configured to perform 505 in the method shown in FIG. 5, and the sending unit 1603 may be configured to perform 502 in the method shown in FIG. 5.

For another example, the receiving unit 1601 may be configured to perform 601 and 602 in the method shown in FIG. 6, and the processing unit 1602 may be configured to perform 603 in the method shown in FIG. 6.

For another example, the receiving unit 1601 may be configured to perform 701 and 702 in the method shown in FIG. 7, the processing unit 1602 may be configured to perform 703 and 707 in the method shown in FIG. 7, and the sending unit 1603 may be configured to perform 704 and 706 in the method shown in FIG. 7.

For another example, the receiving unit 1601 may be configured to perform 803 and 804 in the method shown in FIG. 8, and the processing unit 1602 may be configured to perform 805 in the method shown in FIG. 8.

For another example, the receiving unit 1601 may be configured to perform 1504 and 1506 in the method shown in FIG. 15, the processing unit 1602 may be configured to perform 1507 in the method shown in FIG. 15, and the sending unit 1603 may be configured to perform 1505 and 1508 in the method shown in FIG. 15.

In an example, the receiving unit 1601 is configured to receive first track information of a first traffic participant from a second roadside device, where the first track information indicates a first track outside a coverage area of the apparatus 1600. The sending unit 1603 is configured to send a track forwarding message to a vehicle, where the track forwarding message indicates the first track.

In still another example, the receiving unit 1601 is configured to receive a vehicle service request message from the vehicle, where the vehicle service request message includes verification information of the vehicle. The processing unit 1602 is configured to determine, based on the verification information, that the vehicle succeeds in verification.

Optionally, the receiving unit 1601 is configured to receive a first verification notification message from a server, where the first verification notification message indicates whether the vehicle succeeds in the verification. The processing unit 1602 is specifically configured to determine, based on the verification information and the first verification notification message, that the vehicle succeeds in the verification.

Optionally, the receiving unit 1601 is configured to receive service vehicle information from a server, where the service vehicle information indicates a plurality of vehicles that have service receiving permission. The processing unit 1602 is specifically configured to: determine, based on the verification information and the service vehicle information, whether the vehicle belongs to the plurality of vehicles that have the service receiving permission; and determine, based on a determining result that the vehicle belongs to the plurality of vehicles that have the service receiving permission, that the vehicle succeeds in the verification.

Optionally, the receiving unit 1601 is configured to receive a second verification notification message from a third roadside device, where the second verification notification message indicates that the vehicle succeeds in the verification. The processing unit 1602 is specifically configured to determine, based on the verification information and the second verification notification message, that the vehicle succeeds in the verification.

In still another example, the receiving unit 1601 is configured to receive a first handover request message, where the first handover request message is used to request to hand over a service device of the vehicle from a fourth roadside device to the apparatus 1600. The sending unit 1603 is configured to send a first handover response message to the fourth roadside device in response to the first handover request message, where the first handover response message indicates that the apparatus 1600 becomes the service device of the vehicle.

In still another example, the sending unit 1603 is configured to send second track information of a second traffic participant to a fifth roadside device, where the second track information indicates a second track outside a coverage area of the fifth roadside device.

In still another example, the sending unit 1603 is configured to send a third verification notification message to a sixth roadside device, where the third verification notification message indicates that the vehicle succeeds in the verification.

In still another example, the sending unit 1603 is configured to send a second handover request message to a seventh roadside device, where the second handover request message is used to request to hand over the service device of the vehicle from the apparatus 1600 to the seventh roadside device. The receiving unit 1601 is configured to receive a second handover response message from the seventh roadside device, where the second handover response message indicates that the seventh roadside device becomes the service device of the vehicle.

For example, the apparatus 1600 may alternatively be a vehicle shown in FIG. 1 to FIG. 3.

For example, the receiving unit 1601 may be configured to perform 405 in the method shown in FIG. 4, and the sending unit 1603 may be configured to perform 401 in the method shown in FIG. 4.

For another example, the sending unit 1603 may be configured to perform 501 in the method shown in FIG. 5.

For another example, the sending unit 1603 may be configured to perform 602 in the method shown in FIG. 6.

For another example, the sending unit 1603 may be configured to perform 702 in the method shown in FIG. 7.

For another example, the sending unit 1603 may be configured to perform 801 and 804 in the method shown in FIG. 8.

For another example, the receiving unit 1601 may be configured to perform 1503 and 1508 in the method shown in FIG. 15, and the sending unit 1603 may be configured to perform 1501 and 1506 in the method shown in FIG. 15.

In an example, the receiving unit 1601 is configured to receive track information from a first roadside device, where the track information is used to indicate a track outside a coverage area of the first roadside device.

Optionally, the sending unit 1603 is configured to send beyond-line-of-sight sensing range indication information to the first roadside device, where the beyond-line-of-sight sensing range indication information indicates a beyond-line-of-sight sensing range requested by the apparatus 1600.

In still another example, the sending unit 1603 is configured to send a first vehicle service request message to the first roadside device, where the first vehicle service request message includes verification information of the apparatus 1600.

Optionally, when a service device of the apparatus 1600 is the first roadside device and after the apparatus 1600 enters a coverage area of a second roadside device, the sending unit 1603 is configured to send a second vehicle service request message to the second roadside device, where the second vehicle service request message includes the verification information of the apparatus 1600.

For example, the apparatus 1600 may alternatively be a server shown in FIG. 1 to FIG. 3.

For example, the receiving unit 1601 may be configured to perform 502 in the method shown in FIG. 5, the processing unit 1602 may be configured to perform 503 in the method shown in FIG. 5, and the sending unit 1603 may be configured to perform 504 in the method shown in FIG. 5.

For another example, the sending unit 1603 may be configured to perform 601 in the method shown in FIG. 6.

For another example, the receiving unit 1601 may be configured to perform 704 in the method shown in FIG. 7, the processing unit 1602 may be configured to perform 705 in the method shown in FIG. 7, and the sending unit 1603 may be configured to perform 701 and 706 in the method shown in FIG. 7.

In an example, the receiving unit 1601 is configured to receive a vehicle verification request message from a first roadside device, where the vehicle verification request message includes verification information of a vehicle, and the first roadside device is located within a coverage area of the apparatus 1600. The processing unit 1602 is configured to verify the vehicle based on the verification information. The sending unit 1603 is configured to send a verification notification message to the first roadside device, where the verification notification message indicates whether the vehicle succeeds in the verification.

Optionally, the sending unit 1603 is further configured to send service vehicle information to the first roadside device, where the service vehicle information indicates a plurality of vehicles that have service receiving permission.

In still another example, the receiving unit 1601 is configured to receive an address and topology information of a second roadside device from a second server, where the second roadside device is located within a coverage area of the second server and outside the coverage area of the apparatus 1600. The sending unit 1603 is configured to send the address and the topology information of the second roadside device to the first roadside device.

In still another example, the sending unit 1603 is configured to send an address and topology information of the first roadside device to a third server, where the first roadside device is located within the coverage area of the apparatus 1600.

One or more units in the embodiment shown in FIG. 16 may be implemented by using software, hardware, firmware, or a combination thereof. The software or firmware includes but is not limited to computer program instructions or code, and may be executed by a hardware processor. The hardware includes but is not limited to various types of integrated circuits, such as a central processing unit (CPU, central processing unit), a digital signal processor (DSP, digital signal processor), a field programmable gate array (FPGA, field programmable gate array), or an application-specific integrated circuit (ASIC, application-specific integrated circuit).

Optionally, the receiving unit 1601 may use one or more receiving manners, where the receiving manner includes but is not limited to receiving through cellular communication, Wi-Fi (wireless fidelity, wireless local area network), WiMAX (worldwide interoperability for microwave access, worldwide interoperability for microwave access), Bluetooth (Bluetooth communication technology), ZigBee (ZigBee communication technology), optical communication, satellite communication, infrared communication, transmission line communication, a hardware interface, and wiring on a hardware circuit board, or obtaining a parameter from a software module, or reading information from a storage device.

Optionally, the receiving unit 1601 includes a plurality of receiving subunits, and the plurality of receiving subunits are separately configured to receive storage resource information of at least one of at least two components in a terminal. Optionally, the plurality of receiving subunits are located in a plurality of different components in the terminal. Optionally, the plurality of receiving subunits receive the storage resource information in at least one receiving manner, where the receiving manner includes but is not limited to receiving through cellular communication, Wi-Fi, WiMAX, Bluetooth, ZigBee, optical communication, satellite communication, infrared communication, transmission line communication, a hardware interface, and wiring on a hardware circuit board, or obtaining a parameter from a software module, or reading information from a storage device.

Optionally, the sending unit 1603 may use one or more sending manners, where the sending manner includes but is not limited to sending through cellular communication, Wi-Fi, WiMAX, Bluetooth, ZigBee, optical communication, satellite communication, infrared communication, transmission line communication, a hardware interface, and wiring on a hardware circuit board, or inputting a parameter to a software module, or writing information to a memory.

Optionally, the sending unit 1603 includes a plurality of sending subunits, and the plurality of sending subunits are separately configured to send at least one piece of indication information to a plurality of components. Optionally, the plurality of sending subunits are located in a plurality of different components in the terminal. Optionally, the plurality of sending subunits send the storage resource information in at least one sending manner, where the sending manner includes but is not limited to sending through cellular communication, Wi-Fi, WiMAX, Bluetooth, ZigBee, optical communication, satellite communication, infrared communication, transmission line communication, a hardware interface, and wiring on a hardware circuit board, or inputting a parameter to a software module, or writing information to a memory.

FIG. 17 is a schematic diagram of a structure of an apparatus 1700 according to an embodiment of this application. The apparatus 1700 may include at least one processor 1702 and a communication interface 1703.

Optionally, the apparatus 1700 may further include one or more of a memory 1701 and a bus 1704. Any two or all three of the memory 1701, the processor 1702, and the communication interface 1703 may be communicatively connected to each other through the bus 1704.

Optionally, the memory 1701 may be a read only memory (read only memory, ROM), a static storage device, a dynamic storage device, or a random access memory (random access memory, RAM). The processor 1702 may read computer instructions from the memory 1701 through the communication interface 1703, and run the computer instructions, so that the apparatus 1700 is enabled to perform the method shown in any one of FIG. 4 to FIG. 8 or FIG. 15 in this application. Specifically, the method may be performed on any side of a roadside device side, a vehicle, or a server.

Optionally, the processor 1702 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1702 may implement or execute the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes, in combination with hardware of the processor, a function that needs to be performed by a unit included in the apparatus in embodiments of this application, or performs the steps of the exchange method according to embodiments of this application.

Optionally, the communication interface 1703 may use a transceiver apparatus, for example, but not limited to, a transceiver, to implement communication between the apparatus and another device or a communication network. The communication interface 1703 may be, for example, an interface circuit.

The bus 1704 may include a channel on which information is transmitted between the components (for example, the memory 1701, the processor 1702, and the communication interface 1703) of the apparatus.

A person skilled in the art may clearly understand that, descriptions of embodiments provided in this application may be mutually referenced. For ease and brevity of description, for example, for functions of the apparatuses and devices and performed steps that are provided in embodiments of this application, refer to related descriptions in method embodiments of this application. Reference can also be made between various method embodiments and between various apparatus embodiments.

A person skilled in the art may understand that all or some of the steps of the method embodiments may be implemented by a program instructing related hardware. The program may be stored in a computer-readable storage medium. When the program is executed, all or some of the steps of the method embodiments are performed. The foregoing storage medium includes various media that can store program code, such as a ROM, a RAM, a magnetic disk, or an optical disc.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL, digital subscriber line)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid state disk, SSD)), or the like.

In the several embodiments provided in this application, it should be understood that the disclosed system, apparatus, and method may be implemented in other manners without departing from the scope of this application. For example, the described embodiments are merely examples. For example, division into the modules or units is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. A person of ordinary skill in the art may understand and implement the embodiments without creative efforts.

In addition, the schematic diagrams illustrating the system, apparatus, method, and different embodiments may be combined or integrated with other systems, modules, technologies or methods without departing from the scope of this application. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A track information exchange method, wherein the method is applied to a first roadside device, and comprises:
receiving a vehicle service request message from a vehicle, wherein the vehicle service request message comprises verification information of the vehicle;
determining, based on the verification information, that the vehicle succeeds in verification;
receiving first track information of a first traffic participant from a second roadside device, wherein the first track information indicates a first track outside a coverage area of the first roadside device; and
sending a track forwarding message to the vehicle, wherein the track forwarding message indicates the first track.

2. The exchange method according to claim 1, wherein the determining, based on the verification information, that the vehicle succeeds in verification comprises:
sending a vehicle verification request message to a first server, wherein the vehicle verification request message comprises the verification information;
receiving a first verification notification message from the first server, wherein the first verification notification message indicates whether the vehicle succeeds in the verification; and
determining, based on the first verification notification message indicating that the vehicle succeeds in the verification, that the vehicle succeeds in the verification.

3. The exchange method according to claim 1, wherein the determining, based on the verification information, that the vehicle succeeds in verification comprises:
receiving service vehicle information from a first server, wherein the service vehicle information indicates a plurality of vehicles that have service receiving permission;
determining, based on the verification information and the service vehicle information, whether the vehicle belongs to the plurality of vehicles that have the service receiving permission; and
determining, based on a determining result that the vehicle belongs to the plurality of vehicles that have the service receiving permission, that the vehicle succeeds in the verification.

4. The method according to claim 2 or 3, wherein the method further comprises:
sending a vehicle service response message to the vehicle, wherein the vehicle service response message indicates that the vehicle succeeds in the verification.

5. The exchange method according to claim 3, wherein the service vehicle information is index information of the plurality of vehicles that have the service receiving permission, and the track forwarding message is a periodic non-repetitive message; and the method further comprises:
receiving, from the first server, a verification failure message indicating that the vehicle fails in the verification; and
stopping sending the track forwarding message to the vehicle based on the verification failure message.

6. The exchange method according to claim 5, wherein the method further comprises:
sending a vehicle service response message to the vehicle, wherein the vehicle service response message indicates that the vehicle fails in the verification.

7. The exchange method according to claim 1, wherein the determining, based on the verification information, that the vehicle succeeds in verification comprises:
receiving a second verification notification message from a third roadside device, wherein the second verification notification message indicates that the vehicle succeeds in the verification; and
determining, based on the verification message and the second verification notification message, that the vehicle succeeds in the verification.

8. The exchange method according to any one of claims 1 to 7, wherein before the sending a track forwarding message to the vehicle, the method further comprises:
receiving a first handover request message from a fourth roadside device, wherein the first handover request message is used to request to hand over a service device of the vehicle from the fourth roadside device to the first roadside device; and
sending a first handover response message to the fourth roadside device in response to the first handover request message, wherein the first handover response message indicates that the first roadside device becomes the service device of the vehicle.

9. The exchange method according to claim 8, wherein the sending a first handover response message to the fourth roadside device comprises:
when track information of the vehicle within the coverage area of the first roadside device is obtained, or when the vehicle is located in an intersection area between the coverage area of the first roadside device and a coverage area of the fourth roadside device, sending the first handover response message to the fourth roadside device.

10. The exchange method according to claim 8 or 9, wherein the first handover response message comprises first feature information of the vehicle;
the method further comprises: obtaining second feature information within the coverage area of the first roadside device; and
the sending a first handover response message to the fourth roadside device comprises: sending the first handover response message to the fourth roadside device based on a matching result of matching the second feature information with the first feature information.

11. The exchange method according to claim 8, wherein the first roadside device is located within a coverage area of the first server, and the fourth roadside device is located within a coverage area of a second server, the first server is different from the second server; and the method further comprises:
receiving an address and topology information of the fourth roadside device from the first server; and
the sending a first handover response message to the fourth roadside device comprises:
sending the first handover response message to the fourth roadside device based on the address and the topology information of the fourth roadside device.

12. The exchange method according to any one of claims 1 to 11, wherein the method further comprises:
sending a first track request message to the second roadside device, wherein the first track request message is used to request track information obtained by the second roadside device; and
the receiving first track information from a second roadside device comprises:
receiving a first track response message from the second roadside device in response to the first track request message, wherein the first track response message comprises the first track information.

13. The exchange method according to claim 12, wherein before the sending a first track request message to the second roadside device, the method further comprises:
determining a beyond-line-of-sight sensing range; and
determining the second roadside device based on the beyond-line-of-sight sensing range and a distance between a plurality of roadside devices, wherein the plurality of roadside devices comprise the first roadside device and the second roadside device, and the beyond-line-of-sight sensing range is larger than the coverage area of the first roadside device.

14. The exchange method according to any one of claims 1 to 13, wherein the method further comprises:
obtaining second track information of a second traffic participant, wherein the second track information indicates a second track; and
sending the second track information to a fifth roadside device.

15. The exchange method according to claim 14, wherein the method further comprises:
receiving a second track request message from the fifth roadside device, wherein the second track request message is used to request track information obtained by the first roadside device; and
the sending the second track information to a fifth roadside device comprises:
sending a second track response message to the fifth roadside device in response to the second track request message, wherein the second track response message comprises the second track information.

16. The exchange method according to any one of claims 1 to 15, wherein the method further comprises:
sending a third verification notification message to a sixth roadside device, wherein the third verification notification message indicates that the vehicle succeeds in the verification.

17. The exchange method according to any one of claims 1 to 16, wherein the method further comprises:
sending a second handover request message to a seventh roadside device, wherein the second handover request message is used to request to hand over the service device of the vehicle from the first roadside device to the seventh roadside device; and
receiving a second handover response message from the seventh roadside device, wherein the second handover response message indicates that the seventh roadside device becomes the service device of the vehicle.

18. A track information exchange method, wherein the method is applied to a vehicle, and comprises:
sending a first vehicle service request message to a first roadside device, wherein the first vehicle service request message comprises verification information of the vehicle; and
receiving track information from the first roadside device, wherein the track information indicates a track outside a coverage area of the first roadside device.

19. The exchange method according to claim 18, wherein the track information indicates one or more of the following: a traffic participant identifier, sensing time, a traffic participant type, a traffic participant appearance, a traffic participant model, a traffic participant license plate number, a location, a moving speed, and a moving direction.

20. The exchange method according to claim 18 or 19, wherein the method further comprises:
sending beyond-line-of-sight sensing range indication information to the first roadside device, wherein the beyond-line-of-sight sensing range indication information indicates a beyond-line-of-sight sensing range requested by the vehicle.

21. The exchange method according to any one of claims 18 to 20, wherein the method further comprises:
when a service device of the vehicle is the first roadside device and after the vehicle enters a coverage area of a second roadside device, sending a second vehicle service request message to the second roadside device, wherein the second vehicle service request message comprises the verification information of the vehicle.

22. A track information exchange method, wherein the method is applied to a first server, and comprises:
receiving a vehicle verification request message from a first roadside device, wherein the vehicle verification request message comprises verification information of a vehicle, and the first roadside device is located within a coverage area of the first server;
verifying the vehicle based on the verification information; and
sending a verification notification message to the first roadside device, wherein the verification notification message indicates whether the vehicle succeeds in the verification.

23. The exchange method according to claim 22, wherein the method further comprises:
sending service vehicle information to the first roadside device, wherein the service vehicle information indicates a plurality of vehicles that have service receiving permission.

24. The exchange method according to claim 23, wherein the service vehicle information is index information of the plurality of vehicles that have the service receiving permission.

25. The exchange method according to any one of claims 22 to 24, wherein the method further comprises:
receiving an address and topology information of a second roadside device from a second server, wherein the second roadside device is located within a coverage area of the second server and outside the coverage area of the first server; and
sending the address and the topology information of the second roadside device to the first roadside device.

26. The exchange method according to any one of claims 22 to 25, wherein the method further comprises:
sending an address and topology information of the first roadside device to a third server.

27. A track information exchange method, wherein the method is applied to a second roadside device, and comprises:
sending first track information of a first traffic participant to a first roadside device, wherein the first track information indicates a first track outside a coverage area of the first roadside device.

28. The exchange method according to claim 27, wherein the method further comprises:
receiving a first track request message from the first roadside device, wherein the first track request message is used to request track information obtained by the second roadside device; and
the sending first track information to a first roadside device comprises: sending a first track response message to the first roadside device in response to the first track request message, wherein the first track response message comprises the first track information.

29. The exchange method according to claim 27 or 28, wherein the method further comprises:
receiving a vehicle service request message from a vehicle, wherein the vehicle service request message comprises verification information of the vehicle; and
determining, based on the verification information, that the vehicle succeeds in verification.

30. A track information exchange method, wherein the method is applied to a third roadside device, and comprises:
receiving a vehicle service request message from a vehicle, wherein the vehicle service request message comprises verification information of the vehicle;
determining, based on the verification information, that the vehicle succeeds in verification; and
sending a second verification notification message to a first roadside device, wherein the second verification notification message indicates that the vehicle succeeds in the verification.

31. The exchange method according to claim 30, wherein the first roadside device is located within a coverage area of a first server, and the third roadside device is located within a coverage area of a third server; and the method further comprises:
receiving an address and topology information of the first roadside device from the third server; and
the sending a second verification notification message to a first roadside device comprises: sending the second verification notification message to the first roadside device based on the address and the topology information of the first roadside device.

32. A track information exchange method, wherein the method is applied to a fourth roadside device, and comprises:
sending a first handover request message to a first roadside device, wherein the first handover request message is used to request to hand over a service device of a vehicle from the fourth roadside device to the first roadside device; and
receiving a first handover response message from the first roadside device, wherein the first handover response message indicates that the first roadside device becomes the service device of the vehicle.

33. The exchange method according to claim 32, wherein the first roadside device is located within a coverage area of a first server, and the fourth roadside device is located within a coverage area of a fourth server; and the method further comprises:
receiving an address and topology information of the first roadside device from the fourth server; and
the sending a first handover request message to a first roadside device comprises: sending the first handover request message to the first roadside device based on the address and the topology information of the first roadside device.

34. The exchange method according to claim 32 or 33, wherein the method further comprises:
receiving a vehicle service request message from the vehicle, wherein the vehicle service request message comprises verification information of the vehicle; and
determining, based on the verification information, that the vehicle succeeds in verification.

35. A track information exchange apparatus, wherein the apparatus is used in a first roadside device, and comprises:
a receiving unit, configured to receive a vehicle service request message from a vehicle, wherein the vehicle service request message comprises verification information of the vehicle;
a processing unit, configured to determine, based on the verification information, that the vehicle succeeds in verification, wherein
the receiving unit is further configured to receive first track information of a first traffic participant from a second roadside device, wherein the first track information indicates a first track outside a coverage area of the first roadside device; and
a sending unit, configured to send a track forwarding message to the vehicle, wherein the track forwarding message indicates the first track.

36. The apparatus according to claim 35, wherein
the sending unit is further configured to send a vehicle verification request message to a first server, wherein the vehicle verification request message comprises the verification information;
the receiving unit is further configured to receive a first verification notification message from the first server, wherein the first verification notification message indicates whether the vehicle succeeds in the verification; and
the processing unit is specifically configured to determine, based on the first verification notification message indicating that the vehicle succeeds in the verification, that the vehicle succeeds in the verification.

37. The apparatus according to claim 35, wherein
the receiving unit is further configured to receive service vehicle information from a first server, wherein the service vehicle information indicates a plurality of vehicles that have service receiving permission; and
the processing unit is specifically configured to:
determine, based on the verification information and the service vehicle information, whether the vehicle belongs to the plurality of vehicles that have the service receiving permission; and
determine, based on a determining result that the vehicle belongs to the plurality of vehicles that have the service receiving permission, that the vehicle succeeds in the verification.

38. The apparatus according to claim 36 or 37, wherein
the sending unit is further configured to send a vehicle service response message to the vehicle, wherein the vehicle service response message indicates that the vehicle succeeds in the verification.

39. The apparatus according to claim 37, wherein the service vehicle information is index information of the plurality of vehicles that have the service receiving permission, and the track forwarding message is a periodic non-repetitive message;
the receiving unit is further configured to receive, from the first server, a verification failure message indicating that the vehicle fails in the verification; and
the processing unit is further configured to stop sending the track forwarding message to the vehicle based on the verification failure message.

40. The apparatus according to claim 39, wherein
the sending unit is further configured to send a vehicle service response message to the vehicle, wherein the vehicle service response message indicates that the vehicle fails in the verification.

41. The apparatus according to claim 35, wherein
the receiving unit is further configured to receive a second verification notification message from a third roadside device, wherein the second verification notification message indicates that the vehicle succeeds in the verification; and
the processing unit is specifically configured to determine, based on the verification message and the second verification notification message, that the vehicle succeeds in the verification.

42. The apparatus according to any one of claims 35 to 41, wherein before the sending unit sends the track forwarding message to the vehicle,
the receiving unit is further configured to receive a first handover request message from a fourth roadside device, wherein the first handover request message is used to request to hand over a service device of the vehicle from the fourth roadside device to the roadside device; and
the sending unit is further configured to send a first handover response message to the fourth roadside device in response to the first handover request message, wherein the first handover response message indicates that the roadside device becomes the service device of the vehicle.

43. The apparatus according to claim 42, wherein
the sending unit is specifically configured to: when track information of the vehicle within the coverage area of the first roadside device is obtained, or when the vehicle is located in an intersection area between the coverage area of the first roadside device and a coverage area of the fourth roadside device, send the first handover response message to the fourth roadside device.

44. The apparatus according to claim 42 or 43, wherein the first handover response message comprises first feature information of the vehicle;
the processing unit is further configured to obtain second feature information within the coverage area of the first roadside device; and
the sending unit is specifically configured to send the first handover response message to the fourth roadside device based on a matching result of matching the second feature information with the first feature information.

45. The apparatus according to claim 42, wherein the roadside device is located within a coverage area of the first server, the fourth roadside device is located within a coverage area of a second server, and the first server is different from the second server;
the receiving unit is further configured to receive an address and topology information of the fourth roadside device from the first server; and
the sending unit is specifically configured to send the first handover response message to the fourth roadside device based on the address and the topology information of the fourth roadside device.

46. The apparatus according to any one of claims 35 to 45, wherein
the sending unit is further configured to send a first track request message to the second roadside device, wherein the first track request message is used to request track information obtained by the second roadside device; and
the receiving unit is specifically configured to receive a first track response message from the second roadside device in response to the first track request message, wherein the first track response message comprises the first track information.

47. The apparatus according to claim 46, wherein before the sending unit sends the first track request message to the second roadside device,
the processing unit is further configured to determine a beyond-line-of-sight sensing range; and
the processing unit is further configured to determine the second roadside device based on the beyond-line-of-sight sensing range and a distance between a plurality of roadside devices, wherein the plurality of roadside devices comprise the roadside device and the second roadside device, and the beyond-line-of-sight sensing range is larger than the coverage area of the roadside device.

48. The apparatus according to any one of claims 35 to 47, wherein the roadside device further comprises a receiving unit, wherein the receiving unit is configured to obtain second track information of a second traffic participant, wherein the second track information indicates a second track; and
the sending unit is further configured to send the second track information to a fifth roadside device.

49. The apparatus according to claim 48, wherein
the receiving unit is further configured to receive a second track request message from the fifth roadside device, wherein the second track request message is used to request track information obtained by the roadside device; and
the sending unit is specifically configured to send a second track response message to the fifth roadside device in response to the second track request message, wherein the second track response message comprises the second track information.

50. The apparatus according to any one of claims 35 to 49, wherein
the sending unit is further configured to send a third verification notification message to a sixth roadside device, wherein the third verification notification message indicates that the vehicle succeeds in the verification.

51. The apparatus according to any one of claims 35 to 50, wherein
the sending unit is further configured to send a second handover request message to a seventh roadside device, wherein the second handover request message is used to request to hand over the service device of the vehicle from the roadside device to the seventh roadside device; and
the receiving unit is further configured to receive a second handover response message from the seventh roadside device, wherein the second handover response message indicates that the seventh roadside device becomes the service device of the vehicle.

52. A track information exchange apparatus, wherein the apparatus is used in a vehicle, and comprises:
a sending unit, configured to send a first vehicle service request message to a first roadside device, wherein the first vehicle service request message comprises verification information of the vehicle; and
a receiving unit, configured to receive track information from the first roadside device, wherein the track information indicates a track outside a coverage area of the first roadside device.

53. The apparatus according to claim 52, wherein the track information indicates one or more of the following: a traffic participant identifier, sensing time, a traffic participant type, a traffic participant appearance, a traffic participant model, a traffic participant license plate number, a location, a moving speed, and a moving direction.

54. The apparatus according to claim 52 or 53, wherein
the sending unit is further configured to send beyond-line-of-sight sensing range indication information to the first roadside device, wherein the beyond-line-of-sight sensing range indication information indicates a beyond-line-of-sight sensing range requested by the vehicle.

55. The apparatus according to any one of claims 52 to 54, wherein
the sending unit is further configured to: when a service device of the vehicle is the first roadside device and after the vehicle enters a coverage area of a second roadside device, send a second vehicle service request message to the second roadside device, wherein the second vehicle service request message comprises the verification information of the vehicle.

56. A track information exchange apparatus, wherein the apparatus is used in a server, and comprises:
a receiving unit, configured to receive a vehicle verification request message from a first roadside device, wherein the vehicle verification request message comprises verification information of a vehicle, and the first roadside device is located within a coverage area of the server;
a processing unit, configured to verify the vehicle based on the verification information; and
a sending unit, configured to send a verification notification message to the first roadside device, wherein the verification notification message indicates whether the vehicle succeeds in the verification.

57. The apparatus according to claim 56, wherein
the sending unit is further configured to send service vehicle information to the first roadside device, wherein the service vehicle information indicates a plurality of vehicles that have service receiving permission.

58. The apparatus according to claim 57, wherein the service vehicle information is index information of the plurality of vehicles that have the service receiving permission.

59. The apparatus according to any one of claims 56 to 58, wherein
the receiving unit is further configured to receive an address and topology information of a second roadside device from a second server, wherein the second roadside device is located within a coverage area of the second server and outside the coverage area of the server; and
the sending unit is further configured to send the address and the topology information of the second roadside device to the first roadside device.

60. The apparatus according to any one of claims 56 to 59, wherein the sending unit is further configured to send an address and topology information of the first roadside device to a third server.

61. A track information exchange apparatus, wherein the apparatus is used in a second roadside device, and comprises:
a sending unit, configured to send first track information of a first traffic participant to a first roadside device, wherein the first track information indicates a first track outside a coverage area of the first roadside device.

62. The apparatus according to claim 61, wherein the apparatus further comprises:
a receiving unit, configured to receive a first track request message from the first roadside device, wherein the first track request message is used to request track information obtained by the second roadside device, and
the sending unit is specifically configured to send a first track response message to the first roadside device in response to the first track request message, wherein the first track response message comprises the first track information.

63. The apparatus according to claim 62, wherein
the receiving unit is further configured to receive a vehicle service request message from a vehicle, wherein the vehicle service request message comprises verification information of the vehicle; and
the apparatus further comprises:
a processing unit, configured to determine, based on the verification information, that the vehicle succeeds in verification.

64. A track information exchange apparatus, wherein the apparatus is used in a third roadside device, and comprises:
a receiving unit, configured to receive a vehicle service request message from a vehicle, wherein the vehicle service request message comprises verification information of the vehicle;
a processing unit, configured to determine, based on the verification information, that the vehicle succeeds in verification; and
a sending unit, configured to send a second verification notification message to a first roadside device, wherein the second verification notification message indicates that the vehicle succeeds in the verification.

65. The apparatus according to claim 64, wherein the first roadside device is located within a coverage area of a first server, and the third roadside device is located within a coverage area of a third server;
the receiving unit is further configured to receive an address and topology information of the first roadside device from the third server; and
the sending unit is specifically configured to send the second verification notification message to the first roadside device based on the address and the topology information of the first roadside device.

66. A track information exchange apparatus, wherein the apparatus is used in a fourth roadside device, and comprises:
a sending unit, configured to send a first handover request message to a first roadside device, wherein the first handover request message is used to request to hand over a service device of a vehicle from the fourth roadside device to the first roadside device; and
a receiving unit, configured to receive a first handover response message from the first roadside device, wherein the first handover response message indicates that the first roadside device becomes the service device of the vehicle.

67. The apparatus according to claim 66, wherein the first roadside device is located within a coverage area of a first server, and the fourth roadside device is located within a coverage area of a fourth server;
the receiving unit is further configured to receive an address and topology information of the first roadside device from the fourth server; and
the sending unit is specifically configured to send the first handover request message to the first roadside device based on the address and the topology information of the first roadside device.

68. The apparatus according to claim 66 or 67, wherein
the receiving unit is further configured to receive a vehicle service request message from the vehicle, wherein the vehicle service request message comprises verification information of the vehicle; and
the apparatus further comprises:
a processing unit, configured to determine, based on the verification information, that the vehicle succeeds in verification.

69. A track information exchange apparatus, comprising a processor and a memory, wherein the memory is configured to store a computer program, and the processor is configured to execute the computer program, so that the apparatus performs the method according to any one of claims 1 to 34.

70. A computer program product, comprising computer instructions, wherein when the computer instructions are run on a processor, the method according to any one of claims 1 to 34 is implemented.

71. A computer-readable storage medium, wherein the computer-readable storage medium stores computer instructions, and when the computer instructions are run on a processor, the method according to any one of claims 1 to 34 is implemented.
